(19) Europäisches Patentamt / European Patent Office / Office européen des brevets

(11) **EP 3 376 471 B1**

(12) **EUROPEAN PATENT SPECIFICATION**

(45) Date of publication and mention
of the grant of the patent:
**15.07.2020 Bulletin 2020/29**

(51) Int Cl.:
**G06T 7/60** *(2017.01)*   **G06T 7/73** *(2017.01)*
**G06T 7/68** *(2017.01)*

(21) Application number: **16875690.6**

(22) Date of filing: **14.12.2016**

(86) International application number:
**PCT/JP2016/087250**

(87) International publication number:
**WO 2017/104713 (22.06.2017 Gazette 2017/25)**

(54) **VEHICLE ROLL ANGLE ESTIMATION SYSTEM, VEHICLE, AND VEHICLE ROLL ANGLE ESTIMATION METHOD**

SYSTEM ZUR KALKULATION DES FAHRZEUGROLLWINKELS, FAHRZEUG, UND VERFAHREN ZUR KALKULATION DES FAHRZEUGROLLWINKELS

SYSTÈME D'ESTIMATION D'ANGLE D'INCLINAISON DE VÉHICULE, VÉHICULE, ET PROCÉDÉ D'ESTIMATION D'ANGLE D'INCLINAISON DE VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.12.2015 JP 2015243099**

(43) Date of publication of application:
**19.09.2018 Bulletin 2018/38**

(73) Proprietor: **Yamaha Hatsudoki Kabushiki Kaisha Iwata-shi, Shizuoka 438-8501 (JP)**

(72) Inventor: **FUKUTA, Takaaki**
**Iwata-shi**
**Shizuoka 438-8501 (JP)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(56) References cited:
**WO-A1-2009/008174    JP-A- 2015 058 915**

- **MARC SCHLIPSING ET AL: "Video-based roll angle estimation for two-wheeled vehicles", INTELLIGENT VEHICLES SYMPOSIUM (IV), 2011 IEEE, IEEE, 5 June 2011 (2011-06-05), pages 876-881, XP031999043, DOI: 10.1109/IVS.2011.5940533 ISBN: 978-1-4577-0890-9**
- **YUNQIONG WANG ET AL: "A fast coarse-to-fine vehicle logo detection and recognition method", ROBOTICS AND BIOMIMETICS, 2007. ROBIO 2007. IEEE INTERNATIONAL CONFERENCE ON, IEEE, PISCATAWAY, NJ, USA, 15 December 2007 (2007-12-15), pages 691-696, XP031252888, ISBN: 978-1-4244-1761-2**

**Description**

TECHNICAL FIELD

The present teaching relates to a technique for estimating vehicle roll angles by means of image processing.

BACKGROUND ART

As a technique for estimating a vehicle's inclination by means of image processing, Japanese Patent Application Publication No. 2015-58915 (Patent Document 1) discloses a roll angle estimation device for estimating a motorcycle's roll angle based on image data taken by a camera mounted on a motorcycle. The roll angle estimation device detects straight lines from the image data, classifies them into vertical straight lines and horizontal straight lines, and calculates an average gradient of the vertical straight lines and an average gradient of the horizontal straight lines. Based on these average gradients, a roll angle of the motorcycle is estimated.

Also, as a technique to correct an inclination of an object in a captured image, Japanese Patent No. 4950290 (Patent Document 2) discloses an imaging device which includes a sensor for detecting a physical inclination of an imaging section. In this imaging device, image processing is performed based on an inclination of the imaging section detected by the sensor, and a histogram of a plurality of angle components appearing in objects in the captured image is generated. Then, angle components of a specific angle that satisfies the predetermined standards in the histogram are selected as rotation angle for rotation conversion. If there is no angle component that satisfies the standards, then the inclination detected by the sensor is selected as the rotation angle for the rotation conversion.

As another technique for correcting an inclination of an image, Japanese Patent Publication No. 4862080 (Patent Document 3) discloses an image processing device which performs correction on a captured image by utilizing brightness information of pixel blocks which constitute the captured image. This image processing device makes use of arithmetic expressions for calculating orientation distribution of brightness gradient or brightness spectrum intensity, into which position information and brightness information of a pixel in the pixel block are inserted to calculate, and determines appropriateness for use in estimating an inclination of an image within the pixel block. Then, based on an inclination angle of a line segment detected in the pixel block which is determined as appropriate for use, an inclination angle of the captured image is obtained.

Marc Schlipsing et al., "Video-based roll angle estimation for two-wheeled vehicles", INTELLIGENT VEHICLES SYMPOSIUM (IV), 2011 IEEE, June5, 2011, paes 876-881, XP031999043, disclose a video-based module that estimates the current roll angle based on gradient orientation histograms. Possible roll angles are derived from gradient statistics by correlation with learnt data and the roll rate is estimated by correlating subsequent image statistics.

Yunqiong Wang et al., "A fast coarse-to-fine vehicle logo detection and recognition method", ROBOTICS AND BIOMIMETICS, 2007, ROBIO 2007, IEEE INTERNATIONAL CONFERENCE ON, IEEE, PISCATAWY, NJ, USA, December 15, 2007, pages 696 - 696, XP031252888, present an algorithm for vision-based classification of vehicles based on vehicle logo.

CITATION LIST

PATENT DOCUMENT

Patent Document 1: Japanese Patent Application Publication No. 2015-58915
Patent Document 2: Japanese Patent No. 4950290
Patent Document 3: Japanese Patent No. 4862080

SUMMARY OF INVENTION

TECHNICAL PROBLEM

In the conventional roll angle estimation device disclosed in Japanese Patent Application Publication No. 2015-58915, there can be cases where an appropriate estimation accuracy is not achieved when the number of detected straight lines in the vertical direction or in the horizontal direction does not reach a valid number for roll angle estimation.

The imaging device disclosed in Japanese Patent No. 4950290 performs image processing based on an inclination of an imaging section detected by the sensor, which means it becomes difficult to make an accurate correction on the inclination of object without the sensor. The image processing device disclosed in Japanese Patent No. 4862080 does not use a sensor, which means it is impossible to verify if an inclination angle of a detected line segment or a detected brightness gradient is a vertical component or a horizontal component. This could lead to a problem that it is impossible to obtain an accurate inclination angle of the captured image.

In consideration of the above, the present application discloses a technique which enables, in a vehicle which is capable of being inclined leftward and rightward, an accurate estimation of a roll angle of an imaging device that is used to capture images forward or rearward images from a vehicle by using an image captured by the imaging device.

SOLUTION TO PROBLEM and ADVANTAGEOUS EFFECTS OF INVENTION

There is a vehicle capable of being inclined to a left-right direction of the vehicle with respect to a traveling direction (i.e., a fore-aft direction of the vehicle). Such a vehicle rolls on an axis of the vehicle's fore-aft direction, i.e., the vehicle rolls in its rolling direction. By obtaining the vehicle's inclination angle (rotation angle) in the left-right direction about an axis represented by the fore-aft direction of the vehicle, i.e., by obtaining a roll angle of the vehicle, it becomes possible to use information which relates to the vehicle roll angle in various applications including vehicle control.

The inventor has conducted studies on systems for estimating vehicle roll angles. The inventor conducted a study about a roll angle estimation system for vehicles, among those which are inclined to the left-right direction, having a limit in their roll angle and having a small change in their pitch angle.

For example, motorcycles are inclined to the left-right direction but there are limits in their roll angles. The vehicle's roll angle is limited to an angle smaller than 90 degrees in both the left and right directions with respect to a center axis represented by a direction which is perpendicular to a road or ground. A maximum angle of the roll angle is determined by an outline shape of the vehicle's body in the left-right direction. Also, a motorcycle has a very small pitch-angle change. The pitch angle changes in the motorcycle are very small changes within a stroke range of suspension.

In addition to motorcycles, examples of the vehicles which have limits in their roll angles and small pitch angle changes include, auto tricycles, LMWs (Leaning Multi Wheels), snowmobiles, and ATVs (All Terrain Vehicles). Specifically, those vehicles which travel or sail on the ground, snow surface or water surface while making contact with the travel surface, i.e., vehicles traveling on a travel surface, have limits in their roll angles and have small pitch angle changes.

The inventor mounted a camera onto a vehicle which has limits in its roll angles and has small pitch angle changes, took images in the vehicle's fore-aft direction while the vehicle was traveling, and analyzed brightness gradient orientation histograms of the captured images. The inventor analyzed brightness gradient orientation histograms of images taken under all possible situations of the traveling vehicle. As a result, the inventor found that in frequency distribution of brightness gradient orientation histogram, there are cases where frequency of brightness gradient orientation representing a vertical-direction edge and frequency of brightness gradient orientation representing a horizontal-direction edge appear outstandingly.

Further, the inventor looked for ways to estimate a roll angle by using the characteristics of a frequency of brightness gradient orientation representing vertical-direction edges and a frequency of brightness gradient orientation representing horizontal-direction edges in a brightness gradient orientation histogram. After careful considerations, the inventor found that there are cases where a certain correlation can be found between skewness of a brightness gradient orientation histogram of a forward or a rearward image taken from a traveling vehicle and vehicle roll angle. The term skewness used herein means a value which indicates symmetricalness of the brightness gradient orientation histogram. A higher level of frequency distribution symmetricalness gives a skewness value closer to zero. Specifically, when the roll angle is zero degrees, i.e., when the vehicle's up-down direction line has no inclination to the left or right direction with respect to the vertical line, there are cases where skewness becomes zero and the skewness changes as the roll angle changes. This seems to be due to a tendency that images obtained by capturing forward or rearward images from a traveling vehicle with an imaging device mounted on the vehicle have a greater number of vertical-direction edges and/or horizontal-direction edges than edges in other directions.

Based on the finding described above, the inventor developed an arrangement for calculating a skewness in a brightness gradient orientation histogram of an image obtained by capturing a forward or a rearward image from a traveling vehicle with an imaging device mounted on the vehicle, and estimating a vehicle roll angle, i.e., a roll angle of the imaging device, based on the skewness.

Further, the inventor found that there are cases also for those vehicles which do not have limits in their roll angle and pitch angle, where images obtained by capturing forward or rearward images from a traveling vehicle with an imaging device mounted on the vehicle, may have a greater number of vertical-direction edges and/or horizontal-direction edges than edges in other directions. Accordingly, it was found that there are cases, in those vehicles which do not have limits in their roll angle and pitch angle, where it is possible to estimate a vehicle roll angle based on the skewness of a brightness gradient orientation histogram of an image obtained by capturing a forward or a rearward image from a traveling vehicle with an imaging device mounted on the vehicle. Hereinafter, "vehicle roll angle" will be called "vehicle inclination angle".

A vehicle roll angle estimation system according to an embodiment of the present teaching is a vehicle roll angle estimation system mounted on a vehicle which is inclinable to left-right direction with respect to traveling direction, as defined in claim 1. A first arrangement of a vehicle roll angle estimation system includes: an imaging device capable of capturing forward or rearward images from the vehicle; and a roll angle estimation device for obtaining captured images taken by the imaging device and analyzing the images thereby estimating a roll angle of the imaging device which changes as the vehicle is inclined. The roll angle estimation device includes: a histogram generator which generates a brightness gradient orientation histogram indicating frequency distribution of brightness gradient orientation of a plurality of pixels contained in the image; and an estimation section configured to calculate a skewness indicating a symmetricalness of the brightness gradient orientation histogram by using $\theta i$ that represents a value of brightness gradient orientation in a plurality of pixels contained in an image, $\theta \mu$ that represents an average value of the brightness gradient orientation in the plurality of pixels, n that represents a quantity of pixels for which the brightness gradient orientation was calculated, and s that represents a standard deviation of brightness gradient orientation in the plurality of pixels, and estimates a roll angle based on the calculated skewness (First arrangement).

The inventor has made intensive studies into relationships between frequency distribution in a brightness gradient orientation histogram of images captured by an imaging device and a roll angle of the imaging device at the time of capturing the images, and found a relationship between symmetricalness of the brightness gradient orientation histogram and the roll angle of the imaging device. Based on this finding, the inventor came to an idea of calculating a skewness of the brightness gradient orientation histogram for use in roll angle estimation. According to the first arrangement disclosed above, the estimation section calculates a skewness which indicates a symmetricalness of the brightness gradient orientation histogram of images, and estimates the roll angle based on the calculated skewness. This enables accurate roll angle estimation. As a result, it is possible to accurately estimate the roll angle of the imaging device by using a captured image.

If the skewness is within a predetermined range with respect to zero, the estimation section may estimate that the roll angle is zero degrees (Second arrangement).

The inventor has found that when the roll angle of the imaging device is zero degrees, the skewness has a value close to zero. Based on this finding, the inventor found that more accurate estimation is possible if the roll angle is estimated as zero degrees when the skewness of the brightness gradient orientation histogram in a captured image is within a predetermined range from zero. It should be noted here that the imaging device has a roll angle of zero means that the vehicle's inclination to its left-right direction with respect to the vertical line of the vehicle's up-down direction line is zero degrees. In other words, a case where the imaging device has a roll angle of zero is a case where the vehicle inclination angle is zero.

It should be noted here that the skewness of the brightness gradient orientation histogram is within a predetermined range from zero means that the skewness is within the range which may be regarded as zero. The predetermined range may be, for example, a tolerable error range according to required estimation accuracy of the roll angle. In other words, in the present Description, the statement that the skewness is zero means not only a case where the skewness is exactly zero but also cases where the skewness can be regarded as zero.

In the above-described second arrangement, the roll angle estimation device may obtain a plurality of images captured in series by the imaging device. In this case, if a target image within the plurality of images does not have the skewness having a value within the predetermined range with respect to zero, the estimation section may select a peak which represents a peak of horizontal-direction edges or vertical-direction edges in brightness gradient orientation histogram of a past image that was estimated as having the roll angle of zero degrees, from a brightness gradient orientation histogram of the target image. The estimation section may estimate a roll angle in the target image based on a brightness gradient orientation of the selected peak (Third arrangement).

According to the third arrangement, the estimation section may select, in a target image which was captured for roll angle estimation after an image for which a roll angle was estimated as zero degrees, a peak which represents a peak of horizontal-direction edges or vertical-direction edges in the past image. The brightness gradient orientation of the selected peak represents vertical-direction edges or horizontal-direction edges contained in the target image. Therefore, it is possible to estimate the roll angle of the imaging device by using the brightness gradient orientation of the selected peak. As described, it is possible to track the peak which represents vertical-direction edges or horizontal-direction edges in a plurality of images captured in series, based on an image which has a zero skewness. This enables to estimate a roll angle in each of a plurality of images captured in series.

It should be noted here that the peak of horizontal-direction edges or vertical-direction edges in the brightness gradient orientation histogram of an image whose roll angle was estimated as zero degrees may be taken, for example, as the center peak or a peak having a perpendicular relationship with the center peak in the brightness gradient orientation histogram.

In the third arrangement, if the target image does not have the skewness within the predetermined range with respect to zero, the estimation section may select a peak whose brightness gradient orientation has an angle from a brightness gradient orientation of a peak of horizontal-direction edges or vertical-direction edges in an image immediately preceding the target image not exceeding by a threshold value from the brightness gradient orientation histogram peak of the target image. The estimation section may estimate a roll angle in the target image based on a brightness gradient orientation of the selected peak (Fourth arrangement). This enables to easily identify, in a brightness gradient orientation histogram of a target image, a peak which represents a peak of horizontal-direction edges or vertical-direction edges in a brightness gradient orientation histogram of a past image whose skewness is zero.

In any of the above-described first through fourth arrangements, the roll angle estimation device may obtain a plurality of images captured in series by the imaging device. In this case, if a target image in the plurality of images does not have the skewness having a value within the predetermined range with respect to zero, the estimation section may perform shape matching between a brightness gradient orientation histogram in a past image and a brightness gradient orientation histogram in the target image, thereby calculating a roll angle displacement from the past image to the target image, and estimates a roll angle in the target image from the roll angle displacement and a roll angle in the past image (Fifth arrangement).

For example, there are cases where a captured image does not contain a sufficient number of brightness gradient orientations representing the horizontal-direction edges and vertical-direction edges, and therefore does not give a distinctive peak. According to the fifth arrangement, it becomes possible, even in such a case as this, to estimate a roll angle by utilizing a past brightness gradient orientation histogram and a current brightness gradient orientation histogram.

In any of the first through the fifth arrangements, the histogram generator may equate, for any angle $\theta$ not smaller than 0 degrees and not greater than 180 degrees, the angle $\theta$ with the angle $\theta$ + 180 degrees, and is thereby capable of generating a brightness gradient orientation histogram within a range of the angle $\theta$(Sixth arrangement). The sixth arrangement enables an efficient generation of the brightness gradient orientation histogram.

In any of the first through the sixth arrangements, the histogram generator is capable of weighting a brightness gradient intensity of each pixel, and adding the brightness gradient orientation of each pixel to the histogram (Seventh arrangement). The seventh arrangement enables generation of a brightness gradient orientation histogram which takes brightness gradient intensity into account.

In any of the first through the seventh arrangements, the vehicle roll angle estimation system may further include an internal sensor which detects an inclination angle of the vehicle. In this case, it is possible to use the inclination angle of the vehicle which is detected by the internal sensor for complementing the roll angle which is estimated by the estimation section (Eighth arrangement). The eighth arrangement enables a complement of a roll angle estimation value in cases where it is impossible to perform the roll angle estimation using the above-described brightness gradient orientation histogram.

In any of the first through the seventh arrangements, the vehicle roll angle estimation system may further include an internal sensor which detects an inclination angle of the vehicle. In this case, it is possible to use the inclination angle of the vehicle which is detected by the internal sensor for verification of the roll angle which is estimated by the estimation section (Ninth arrangement). The ninth arrangement enables to improve roll angle estimation accuracy.

In the above-described eighth arrangement, the vehicle roll angle estimation system may verify the roll angle which is estimated by the estimation section using the inclination angle of the vehicle which is detected by the internal sensor (Tenth arrangement). The tenth arrangement enables to improve roll angle estimation accuracy.

A vehicle provided with the vehicle roll angle estimation system as defined in claim 9 is included in embodiments according to the present teaching.

A vehicle roll angle estimation method according to an embodiment of the present teaching is a vehicle roll angle estimation method as defined in claim 10. A vehicle roll angle estimation method is for estimation, in a vehicle which is inclinable to a left-right direction of a roll angle of an imaging device which changes as the vehicle's inclination changes, by analyzing an image captured by the imaging device capable of capturing forward or rearward images from the vehicle. The vehicle roll angle estimation method includes: an image obtaining step of obtaining an image captured by the imaging device, a histogram generation step of generating a brightness gradient orientation histogram which shows a frequency distribution of brightness gradient orientation of a plurality of pixels contained in the image; and an estimation step in which a computer calculates a skewness that indicates a symmetricalness of the brightness gradient orientation histogram by using $\theta i$ that represents a value of brightness gradient orientation in a plurality of pixels contained in an image, $\theta\mu$ that represents an average value of the brightness gradient orientation in the plurality of pixels, n that represents a quantity of pixels for which the brightness gradient orientation was calculated, and s that represents a standard deviation of brightness gradient orientation in the plurality of pixels, and estimates the roll angle based on the calculated skewness.

A vehicle roll angle estimation program according to an embodiment of the present teaching is a vehicle roll angle estimation program for estimation, in a vehicle which is inclinable to a left-right direction a roll angle of an imaging device which changes as the vehicle's inclination changes, by analyzing an image captured by the imaging device capable of capturing forward or rearward images from the vehicle. The vehicle roll angle estimation program causes a computer to execute: an image obtaining process of obtaining an image captured by the imaging device, a histogram generation process of generating a brightness gradient orientation histogram which shows a frequency distribution of brightness gradient orientation of a plurality of pixels contained in the image; and an estimation process in which a computer calculates a skewness that indicates a symmetricalness of the brightness gradient orientation histogram, and estimates the roll angle based on the calculated skewness.

[Definition of Vehicle]

Vehicles in the present teaching are those vehicles capable of rolling in a rotating direction around an axis provided by the vehicle's fore-aft direction, i.e., rolling direction. Specifically, vehicles covered by the present teaching include those vehicles which travel or sail on a traveling surface such as a ground surface, a snow surface and a water surface, and those vehicles flying in the air. Examples of the vehicles are motorcycles, auto tricycles, LMWs (Leaning Multi Wheels), automobiles, snowmobiles, ATV (All Terrain Vehicles), electric trains, steam trains, marine vehicles (personal watercrafts), boats and ships, aircrafts, helicopters, and drones (remotely controlled or autonomously controlled unmanned aircrafts).

BRIEF DESCRIPTION OF DRAWINGS

[Fig. 1] Fig. 1 is a side view of a vehicle according to Embodiment 1.
[Fig. 2] Fig. 2 is a function block diagram which shows an arrangement example of a roll angle estimation system 10.
[Fig. 3] Fig. 3 is a drawing for describing coordinates in an image.
[Fig. 4] Fig. 4 is a drawing for describing an inclination angle of a vehicle.
[Fig. 5] Fig. 5 is a flow chart which shows an operation example of a roll angle estimation device in Fig. 2.
[Fig. 6] Fig. 6 shows an example of brightness gradient orientations around a pixel.
[Fig. 7A] Fig. 7A shows an example of a Sobel filter which is utilized in calculation of a brightness gradient in the x direction.
[Fig. 7B] Fig. 7B shows an example of a Sobel filter which is utilized in calculation of a brightness gradient in the y direction.
[Fig. 8] Fig. 8 is a flow chart which shows a processing example in executing a calculation according to Mathematical Expression (7).
[Fig. 9] Fig. 9 is a graph which shows an example of relationship between roll angle and skewness.
[Fig. 10A] Fig. 10A shows an example relationship between an image and an inclination of the vehicle 1 when the vehicle 1 has an inclination angle of zero degrees in its left-right direction.
[Fig. 10B] Fig. 10B shows an example of two peaks which are detected in the image in Fig. 10A.
[Fig. 10C] Fig. 10C shows an example of a brightness gradient orientation histogram calculated for an image shown in Fig. 10A.
[Fig. 10D] Fig. 10D shows another example of a brightness gradient orientation histogram when a roll angle is zero.
[Fig. 11A] Fig. 11A shows an example relationship between an image and an inclination of the vehicle 1 when the vehicle 1 has an inclination angle which is not zero degrees in its left-right direction.
[Fig. 11B] Fig. 11B shows an example of two peaks which are detected in the image in Fig. 11A.
[Fig. 12] Fig. 12 shows an example of brightness gradients of peaks detected in a current frame.
[Fig. 13] Fig. 13 is a function block diagram which shows an arrangement example of the roll angle estimation system in Embodiment 2.
[Fig. 14] Fig. 14 is a flow chart which shows an operation example of a roll angle estimation device 20 in Fig. 13.
[Fig. 15] Fig. 15 shows an example of roll angle estimation by utilizing a vehicle roll angle estimation system.
[Fig. 16] Fig. 16 shows an example of roll angle estimation by utilizing a vehicle roll angle estimation system.
[Fig. 17] Fig. 17 shows an example of roll angle estimation by utilizing a vehicle roll angle estimation system.
[Fig. 18] Fig. 18 shows an example of roll angle estimation by utilizing a vehicle roll angle estimation system.
[Fig. 19] Fig. 19 is a drawing for describing a roll angle estimation system.

DESCRIPTION OF EMBODIMENTS

In the following description, for the purpose of explanation, many specific details will be disclosed in order to provide a deep understanding of the present teaching. However, it is clear for those skilled in the art that the present teaching is implementable without these specific details. The present disclosure should be considered as an exemplification of the present teaching, not as an intention to limit the present teaching to specific embodiments provided in the following drawings or description.

Hereinafter, with reference to the drawings, the description will cover a vehicle which includes a vehicle roll angle estimation system as an embodiment of the present teaching. In the present embodiment, a motorcycle will be used as an example of the vehicle. In the drawings, the same or equivalent components will be indicated with the same reference symbols, and their description will not be repeated. Also, note that size of components or proportions among the components in each drawing may not be true to the size of actual components, or actual proportions thereof. It should be noted here that in the following description, the terms forward, rearward, leftward and rightward mean forward, rearward, leftward and rightward when viewed from the vehicle rider sitting on the seat while gripping the handlebar.

(Embodiment 1)

[Overview]

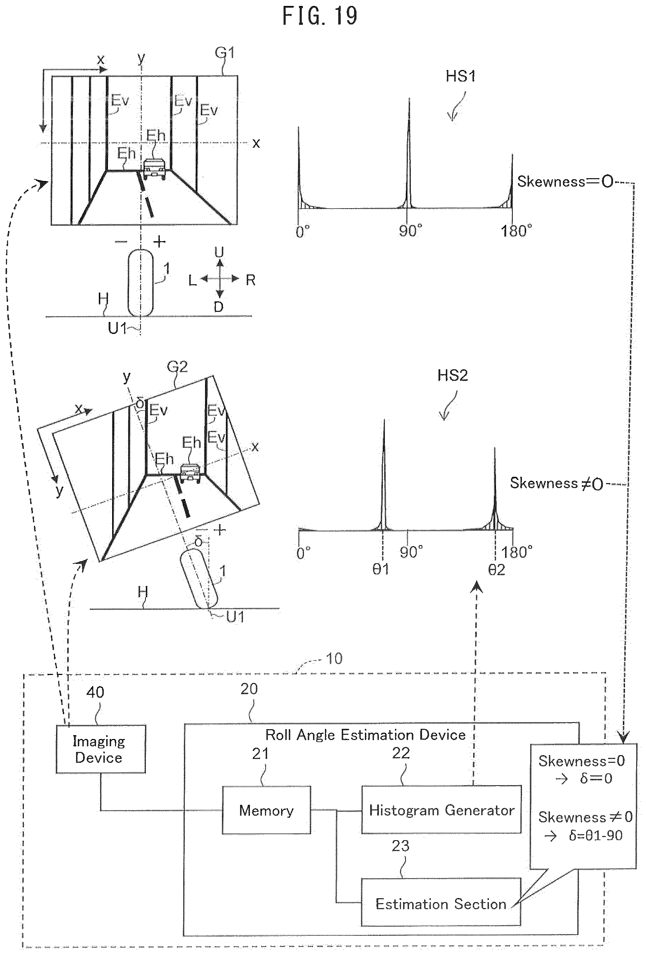

Fig. 19 is a drawing for describing a vehicle roll angle estimation system according to Embodiment 1. The vehicle roll angle estimation system 10 is a vehicle roll angle estimation system mounted on a vehicle 1 which is inclinable to left-right direction with respect to traveling direction. The vehicle roll angle estimation system 10 includes an imaging device 40 and a roll angle estimation device 20. The imaging device 40 is capable of capturing forward images or rearward images from the vehicle 1. The roll angle estimation device 20 obtains images G1, G2 captured by the imaging device 40 and analyzes the images G1, G2, thereby estimating a roll angle of the imaging device 40 which changes as the vehicle 1 is inclined, i.e., estimating an inclination angle of the vehicle 1 in its left-right direction. The roll angle estimation device 20 includes a histogram generator 22 and an estimation section 23. The histogram generator 22 generates a brightness gradient orientation histogram which shows a frequency distribution of the brightness gradient orientation of a plurality of pixels contained in the images G1, G2. The estimation section 23 calculates a skewness which indicates a symmetricalness of the brightness gradient orientation histogram, and estimates a roll angle based on the calculated skewness. For example, it is capable of estimating that the roll angle is zero degrees when the skewness is zero.

[Overall Configuration of Motorcycle]

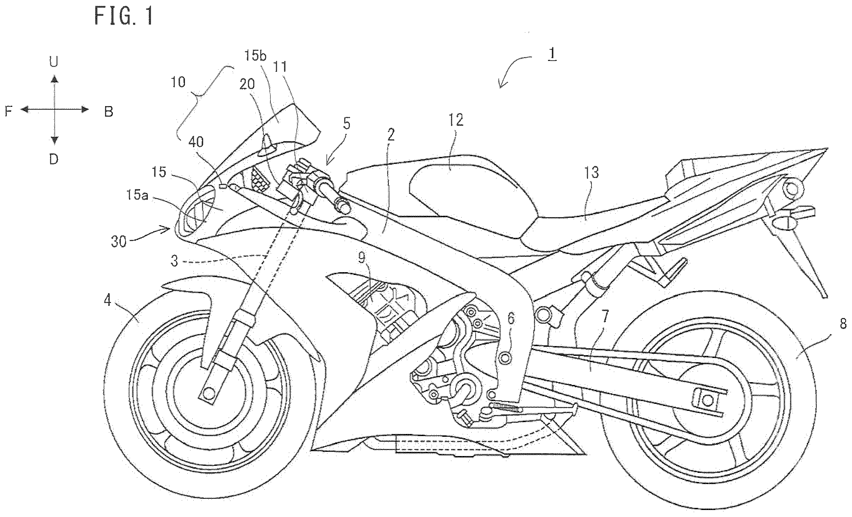

Fig. 1 is a side view of the vehicle 1 in Embodiment 1. The vehicle 1 is provided by a motorcycle as an example of vehicles which are inclinable to a left-right direction. In Fig. 1, Arrow F indicates a forward direction of the vehicle. Arrow B indicates a rearward direction of the vehicle. Arrow U indicates an upward direction of the vehicle. Arrow D indicates a downward direction of the vehicle. A direction which is perpendicular to both of the vehicle's fore-aft direction and the vehicle's up-down direction is the vehicle's left-right direction.
The vehicle 1 includes a head pipe 11, a frame 2, a front fork 3, a front wheel 4, a handlebar 5, a rear arm 7, a rear wheel 8 and an engine 9. The head pipe 11 is at a front of the frame 2. Above the head pipe 11, the handlebar 5 is attached rotatably. Below the head pipe 11 is the front fork 3. The front fork 3 has a lower end portion, where the front wheel 4 is attached rotatably.
The head pipe 11 is connected with the frame 2. The frame 2 extends rearward of the vehicle 1 from the head pipe 11. The frame 2 has its rear end portions curved downward. A pivot shaft 6 is provided at a rear end of the frame 2. The rear arm 7 has its front end portion attached to the pivot shaft 6, and the rear arm 7 is supported around the pivot shaft 6 to pivot up and down. The rear arm 7 has its rear portion, where the rear wheel 8 is attached rotatably.
Below the frame 2 is the engine 9. The engine 9 is mounted onto the frame 2 via a support plate. Above the frame 2 is a fuel tank 12. Behind the fuel tank 12 is a seat 13.
A front cover 15 is provided at a front portion of the vehicle body. The front cover 15 has a windshield 15b on its upper portion. The front cover 15 further has an opening 15a. A head light unit 30 is exposed from the opening 15a behind the front cover 15.
The vehicle 1 further includes a vehicle roll angle estimation system 10. The vehicle roll angle estimation system 10 includes an imaging device 40 and a roll angle estimation device 20. The imaging device 40 is provided by, for example, a camera which is capable of taking images of a forward direction from the vehicle 1. The imaging device 40 is attached to the front cover 15. The imaging device 40 is disposed so that its optical axis aligns with a rearward direction with respect to its travel direction, i.e., disposed in alignment with the fore-aft direction of the vehicle 1. The imaging device 40 is attachable at an intermediate region in the left-right direction of the vehicle 1. When the vehicle 1 is inclined to left and right, an angle of roll of the imaging device 40 (an angle of rotation about the optical axis; hereinafter called roll angle) changes. It is preferable that the imaging device 40 is attached to the vehicle 1 in such a way that a left-right direction (horizontal axis) of the imaging device 40 aligns with the left-right direction (horizontal axis) of the vehicle 1.
The roll angle estimation device 20 analyzes an image taken by the imaging device 40, thereby calculating a roll angle estimation value of the imaging device 40. The roll angle estimation device 20 is attached to the head pipe 11 and connected with the imaging device 40. The connection between the imaging device 40 and the roll angle estimation device 20 may be by means of a wire or radio.

The roll angle estimation device 20 includes a memory to record data of the images taken by the imaging device 40, and a computer (microcomputer) having a processor for processing image data. It should be noted here that the roll angle estimation device 20 may be provided entirely or partially by a circuit (hardware). Embodiments of the present teaching also include programs for the computer to operate as the histogram generator 22 and the estimation section 23; and a non-transitory storage medium in which such programs are recorded.

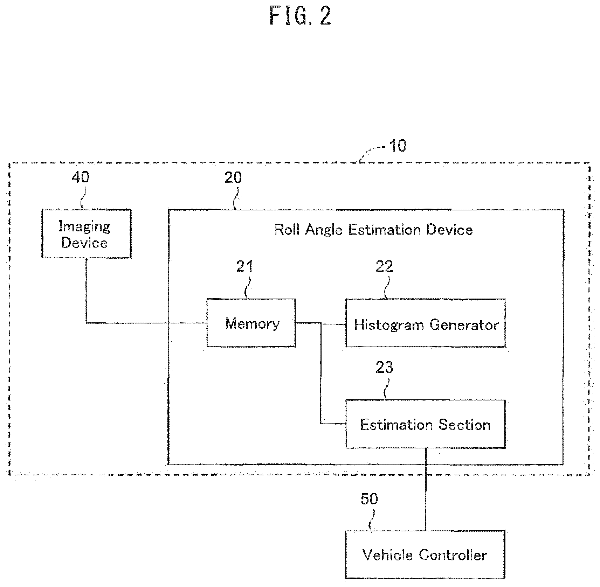

Fig. 2 is a function block diagram which shows an arrangement example of the vehicle roll angle estimation system 10. In the example shown in Fig. 2, the roll angle estimation device 20 includes a memory 21, the histogram generator 22 and the estimation section 23. The memory 21 stores data of images taken by the imaging device 40, data used in the image processing, and data generated in the image processing. The roll angle estimation device 20 obtains images taken by the imaging device 40, and records them in the memory 21. Data representing an image includes pixel values of each of a plurality of pixels which are arranged in a matrix pattern. The data of an image is recorded as pixel values at each point in two-dimensional x-y coordinates, for example. In this case, each point in the x-y coordinates represents one pixel, and the pixel values include a value which indicates a brightness (concentration) of the pixel. Hereinafter, description will assume that in an image, direction of pixel rows (lateral direction) represents x-direction while column (upright) direction represents y-direction.

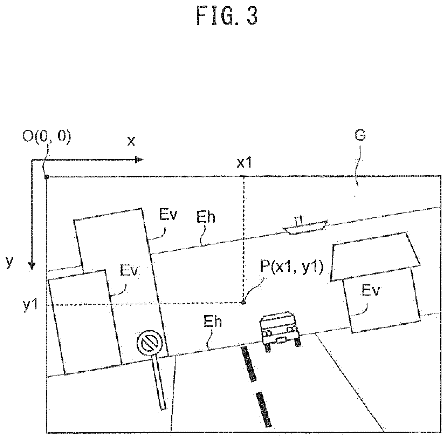

Fig. 3 shows an example of an image G taken by the imaging device 40. As shown in Fig. 3, the present embodiment takes, as an example, a position represented by a top left pixel in the image G as (x,y)=(0,0), i.e., the point of origin in the x-y coordinates. A pixel which is the x1-st from the left and the y1-st from the top in the image G is expressed as (x,y)=(x1,y1 in the coordinates. Herein, an up-down direction of the image G represents y-direction and a lateral direction of the image G represents x-direction. Note that x-direction may sometimes be called horizontal axis of the image G while y-direction may sometimes be called vertical axis of the image G.

Hereinafter, the gravitational direction will be called vertical direction while a direction orthogonal to the vertical direction or a direction perpendicular to the vertical direction will be called horizontal direction. The image G taken by the imaging device 40 contains vertical-direction edges Ev and horizontal-direction edges Eh. The image G shown in Fig. 3 is an image taken when the vehicle 1 is inclined to the right. Because of this the vertical-direction edges Ev are inclined with respect to the vertical axis (y-direction) of the image G by the same angle as the inclination angle of the vehicle 1. Likewise, the horizontal-direction edges Eh are inclined with respect to the horizontal axis (x-direction) of the image G by the same angle as the inclination angle of the vehicle 1.

It should be noted here that the imaging device 40 is capable of imaging continuously at a predetermined interval (capable of taking a movie). In this case, a plurality of images taken continuously are recorded in the memory 21 in such a way that sequential order of the taken images is identifiable. In this case, each image may be called a frame.

The histogram generator 22 generates a brightness gradient orientation histogram which shows a frequency distribution of brightness gradient orientation of a plurality of pixels contained in the image. The histogram generator 22 calculates a brightness gradient orientation in each pixel, and calculates frequency of brightness gradient orientation for each of a plurality of sections (classes) which are defined by dividing an entire range of the brightness gradient orientations. A brightness gradient orientation histogram, which is a set of data indicating frequencies in the plurality of sections, is generated.

The brightness gradient orientation may be calculated as a value which indicates a direction of brightness change in a pixel located around a target pixel. The brightness gradient orientation is perpendicular to the direction of edges in the image. In the brightness gradient orientation histogram, the frequency value in each section may be a value obtained by adding a weighted value as many times as the frequency. The value of the weight may be, for example, a value based on the brightness gradient intensity in each pixel. The plurality of sections defined by dividing the entire range of the brightness gradient orientation may be predetermined. An example of histogram generation process will be described later.

The estimation section 23 estimates a roll angle of the imaging device 40 of the time at which the image was taken, by utilizing the brightness gradient orientation histogram generated by the histogram generator 22. Note that since the imaging device 40 is mounted on the vehicle 1, the roll angle of the imaging device 40 changes as the inclination of the vehicle 1 to the left-right direction changes. For this reason, estimating the roll angle of the imaging device 40 is equivalent to estimating the inclination angle in the left-right direction of the vehicle 1.

Specifically, the estimation section 23 calculates a skewness which indicates a symmetricalness of the brightness gradient orientation histogram, and estimates a roll angle based on the calculated skewness. The skewness may also be understood as a value which indicates a degree of distortion (level of asymmetry) of distribution of brightness gradient orientation in an image. A skewness closer to zero means smaller distortion, namely higher symmetricalness. A skewness Sk can be calculated with the following Mathematical Expression (1) for example, where $\theta i$ represents a value of brightness gradient orientation in a plurality of pixels contained in an image, $\theta \mu$ represents an average value of the brightness gradient orientation in the plurality of pixels, n represents a quantity of pixels for which the brightness gradient orientation was calculated, and s represents a standard deviation of brightness gradient orientation in the plurality of pixels.

[Math 1]

$$\frac{\frac{1}{n}\sum_{i=1}^{n}(\theta i - \theta\mu)^3}{s^3} \qquad (1)$$

By calculating a roll angle using the skewness of brightness gradient orientation histogram in an image as described above, highly accurate roll angle estimation with a simple processing becomes possible. The inventor originally had looked, as disclosed in Japanese Patent Application Publication No. 2015-58915, for a method of detecting straight lines from an image and using orientations of the detected straight lines to identify the vertical direction or the horizontal direction of edges contained in the image, and calculating a roll angle. When this method is employed, it is necessary to process a plurality of frames in order to accurately identify the vertical direction or the horizontal direction. Then, the inventor looked for a way to identify the vertical direction or the horizontal direction by using a brightness gradient orientation histogram. As a result, it was understood that, for example, a method of detecting the vertical direction in an image using a highest frequency value in the brightness gradient orientation histogram can lead to a failure in which the horizontal direction is detected rather than the vertical direction. In order to avoid such an erroneous recognition, considerations were also made into an idea of providing the vehicle 1 with an acceleration sensor or the like, to limit a range of estimation of the vertical direction. However, it was found that values from the acceleration sensor mounted on the vehicle 1 are affected by centrifugal forces, which makes it difficult to make accurate estimation. The inventor then carefully observed the relationship between roll angles of the imaging device 40 mounted on the vehicle 1 and the brightness gradient orientation histogram of captured images, and found a certain relationship between symmetricalness of the brightness gradient orientation histogram and a roll angle of the imaging device. Based on this finding, an arrangement for the estimation section 23 described above was developed. In other words, the estimation section 23 calculates a skewness which indicates a symmetricalness of the brightness gradient orientation histogram in the image for use in the estimation of the roll angle. This enables a highly accurate roll angle estimation.

As an example, there may be an arrangement that when an image gives a skewness which falls within a predetermined range of Th1 with respect to zero, the estimation section 23 estimates that the imaging device 40 which captured the image had a roll angle of zero degrees. In other words, when the skewness is zero or is so close to zero that it may be regarded as zero, the estimation section 23 may determine that a skewness is zero and give an estimation that a roll angle=0. This enables to identify that the roll angle=0 degrees, in those images in a plurality of images captured in series for which skewness is determined as zero. It should be noted here that the range Th1 is an example of the first threshold value.

Also, when the estimation section 23 determines that an image given as a target for roll angle estimation has a skewness which is not zero, it may calculate a roll angle based on a result of comparison between a peak in a brightness gradient orientation histogram of an image in the past and a peak in a brightness gradient orientation histogram of the target image. In this case, the estimation section 23 selects, from the brightness gradient orientation histogram of the target image, a peak which corresponds to the peak that represents the horizontal-direction edges or vertical-direction edges in the brightness gradient orientation histogram of the past image which was determined to have a roll angle of zero degrees. A past image which was determined to have a roll angle of zero degrees has a brightness gradient orientation histogram which has a symmetrical distribution with respect to a center represented by one brightness gradient orientation value. The peak in this brightness gradient orientation histogram, which is located at a position representing the center value will be called center peak. The estimation section 23 may, for example, determine either one of the center peak or another peak which has a perpendicular relationship with the center peak, as a peak which represents the horizontal-direction edges or the vertical-direction edges. The estimation section 23 selects a peak which corresponds to the peak that represents the horizontal-direction edges or vertical-direction edges in a past image which was determined to have a roll angle of zero degrees, from the target image. This enables the estimation section 23 to identify a peak which represents the vertical-direction edges or the horizontal-direction edges in the target image.

The center peak in a brightness gradient orientation histogram of an image which is determined to have a roll angle of zero degrees may be a peak which is closest to a center value (median value) or a peak within a predetermined distance from the median value, in brightness gradient orientation values arranged in descending or ascending order, in a brightness gradient orientation histogram of a plurality of pixels contained in the image. Also, a peak which is closest to or within a predetermined distance of a value of the brightness gradient orientation that has a 90-degree difference from the median value may be taken as the peak which has a perpendicular relationship with the center peak.

As was described earlier, the center peak represents horizontal-direction edges or vertical-direction edges in the image. In cases of generating a brightness gradient orientation histogram on a basis, for example, that for any angle between 0 through 180 degrees the angle θ is equated with an angle (θ+180 degrees), the brightness gradient orientation has a range from 0 through 180 degrees. In this case, a peak which is closest to 90 degrees or a peak which is within a predetermined range from 90 degrees may be picked as the center peak. This center peak represents horizontal-direction edges contained in the image, since the brightness gradient orientation is a direction which is perpendicular to the direction of the edges. In a case where the brightness gradient orientation histogram is generated on a basis that the brightness gradient orientation has a range from 0 through 360 degrees, a peak which is closest to 180 degrees or a peak which is within a predetermined range from 180 degrees will be picked as the center peak. This peak represents vertical-direction edges contained in the image.

If, for example, the estimation section 23 determines that the target image does not have a skewness of zero, a brightness gradient orientation of a peak of horizontal-direction edges or vertical-direction edges in a past image which was determined to have a roll angle of zero degrees is obtained (referenced). The estimation section 23 selects a peak which has a brightness gradient orientation that makes an angle with the obtained (referenced) brightness gradient orientation not exceeding a threshold value Th21 from the brightness gradient orientation histogram of the target image. Thus, a peak in the target image representing the vertical direction or the horizontal direction is selected. In this case, it is preferable that the past image used as the reference should be the latest image which was estimated to have a roll angle of zero degrees.

Also, the image to be used for reference is not limited to those past images determined to have a roll angle of zero degrees. For example, in a case where a peak representing vertical-direction edges or horizontal-direction edges has been selected in an image which is one-frame before, this selected peak's brightness gradient orientation may be used as a basis for selection of a corresponding peak from the brightness gradient orientation histogram of the target image. In this case, it is not necessary that the image which is one-frame before has been determined to have a roll angle of zero degrees. As a specific example, the estimation section 23 obtains (references) a brightness gradient orientation of the peak of horizontal-direction edges or vertical-direction edges in the image which is one-frame before the target image. The estimation section 23 may select a peak which has a brightness gradient orientation that makes an angle with the obtained brightness gradient orientation not greater than a threshold value Th22, from the brightness gradient orientation histogram of the target image. Using a brightness gradient orientation of the selected peak, the estimation section 23 estimates a roll angle in the target image.

The above-mentioned threshold values Th21 and Th22 may be equal or different from each other. Each of the threshold values Th21, Th22 is an example of the second threshold value Th2. The threshold values Th21, Th22 may be pre-recorded, for example, in the memory 21, or may be a value which is calculated based on, e.g., a time difference between the time of capturing the target image and the time of capturing the past image. For example, a maximum angular velocity value in changing roll angles (inclination angles of the vehicle 1) of the imaging device 40 may be recorded in the memory 21 for example. The maximum angular velocity value is multiplied by a time difference between the time of capturing the target image and the time of capturing the past image, and a resulting value may be used as the threshold value Th21 or the threshold value Th22.

As has been described, when it is determined that the target image does not have a skewness of zero, the estimation section 23 selects a peak which corresponds to a peak of the vertical direction or the horizontal direction in a brightness gradient orientation histogram of a past image which was determined to have a roll angle of zero degrees, from the brightness gradient orientation histogram of the target image. This enables to identify a direction of vertical-direction edges or horizontal-direction edges contained in the target image. The estimation section 23 may convert an angle (inclination) of an image of the vertical-direction edges or the horizontal-direction edges with respect to a reference axis (e.g., x-direction) into a roll angle.

For example, the estimation section 23 may perform the roll angle estimation process sequentially for each of a plurality of images taken in series. In this case, the estimation section 23 may estimate that the roll angle is zero degrees if it determines that the target image has a skewness of zero, while identifying the brightness gradient orientation of the vertical direction or the horizontal direction in the target image based on a brightness gradient orientation of the vertical direction or the horizontal direction obtained from a brightness gradient orientation histogram from a past image if it determines that the skewness is not zero. In this case, the estimation section 23 selects a peak which has a brightness gradient orientation of the center peak or of a peak corresponding thereto in a brightness orientation histogram of the past image; or a peak which has a brightness gradient orientation within a range, from the direction perpendicular thereto, given by the second threshold value (Th21 or Th22), from a brightness gradient orientation histogram of the target image.

Following the process described thus far, the estimation section 23 may track the peak which represents horizontal-direction edges or vertical-direction edges in brightness gradient orientation histogram of an image determined to have a roll angle of zero degrees, in the brightness gradient orientation histograms of a plurality of later images. This makes it possible, by using a peak as a reference which represents horizontal-direction edges or vertical-direction edges in brightness gradient orientation histogram of an image determined to have a roll angle of zero degrees, to accurately estimate roll angles in a plurality of later images.

Where the imaging device 40 takes movies, the estimation section 23 may sequentially calculate an estimated value of the roll angle for each of a plurality of images (frames) taken as a series. This enables to generate chronical data of the roll angles.

The estimated value of the roll angle calculated by the estimation section 23 is utilized, for example, in a control provided by a vehicle controller 50. Vehicle control using the roll angle is not limited to specific ones. For example, the vehicle controller 50 may use a distance from a bottom edge of the image to a bottom edge of an object captured in the image, to measure an actual distance from the vehicle to the object. Based on the distance to the object, the vehicle controller 50 may control braking or throttling. In this case, the vehicle controller 50 may first use the roll angle of the imaging device 40 to correct the image, and then calculate the distance from the bottom edge of the image to the bottom edge of an object captured in the image. This enables accurate measurement of the distance to the object even in cases where the vehicle 1 is inclined to left-right direction and the roll angle of the imaging device 40 is changed.

For example, when the vehicle 1 is inclined to its left-right direction, images taken by the imaging device 40 are also inclined. As the image is inclined, the distance from the bottom edge of the image to the bottom edge of an object is altered. In this case, the vehicle controller 50 rotates the image in a reverse direction of the roll angle by the same amount calculated by the estimation section 23. From a distance from the bottom edge of the rotated image to the bottom edge of an object therein, it is possible to calculate an actual distance from the vehicle to the object. This enables accurate measurement of distance from the vehicle 1 to an object even when the vehicle 1 is inclined.

When measuring the distance from the vehicle 1 to an object using an image as described above, it is preferable that the roll angle calculated by the estimation section 23 does not have an error greater than one degree. In cases where an acceleration sensor or a gyro sensor is used in measurement of the inclination angle of the vehicle 1, a few degrees of error must be accepted in general, and therefore it is difficult to accurately measure the distance from the vehicle 1 to an object by using values from these sensors in image processing. Also, the conventional roll angle estimation device disclosed in Japanese Patent Application Publication No. 2015-58915 does not assume a case where an estimated roll angle is used in an image analysis for measurement of a distance to an object on the move. Because of this, the above-described conventional roll angle estimation device does not provide estimation accuracy and processing speed suitable for image analysis to be used in distance measurement and so on. On the contrary, the roll angle estimation device 20 according to the present embodiment is capable of calculating the roll angle within an error range of 1 degree. Therefore, it is possible to accurately measure the distance from the vehicle 1 to an object by means of image processing using the roll angle calculated by the estimation section 23 of the roll angle estimation device 20. Also, while the above-described conventional roll angle estimation device must process a plurality of frames for calculation of a roll angle, the roll angle estimation device 20 according to the present embodiment can determine a roll angle accurately with a single frame when the skewness is determined to be zero.

Also, the vehicle controller 50 is capable of controlling the vehicle 1 by using the roll angle calculated in the estimation section 23 as an inclination angle in left-right direction of the vehicle 1. In this case, the estimation section 23 serves as an outputting device of inclination angles of the vehicle 1. In other words, the roll angle estimation device 20 may be regarded as a vehicle inclination angle calculator which uses image data. The vehicle controller 50 may, based on the inclination angle of the vehicle 1, control braking force, driving power, and attitude of the vehicle 1, for example. In the driving power control, an amount of fuel injection, ignition timing, degree of throttle opening, etc. may be adjusted by using the inclination angle calculated by the roll angle estimation device 20. In the attitude control, suspension may be controlled by using the inclination angle calculated by the roll angle estimation device 20, for example. It should be noted here that the vehicle controller 50 may be provided by a circuit(s) mounted on one or a plurality of substrates or a processor.

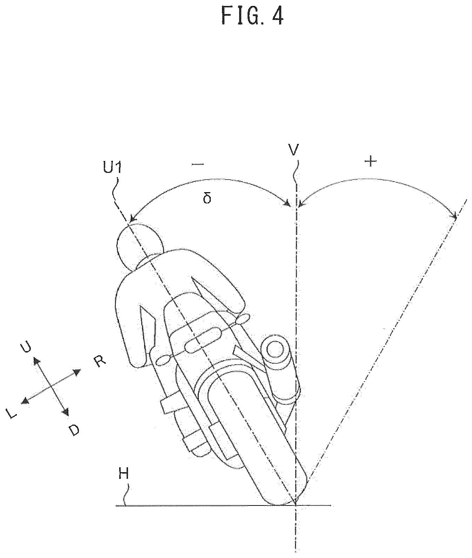

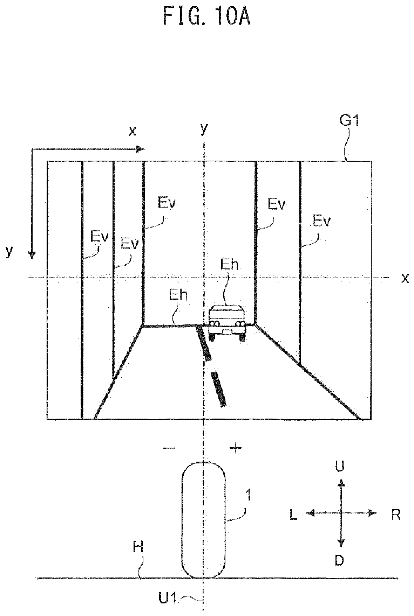

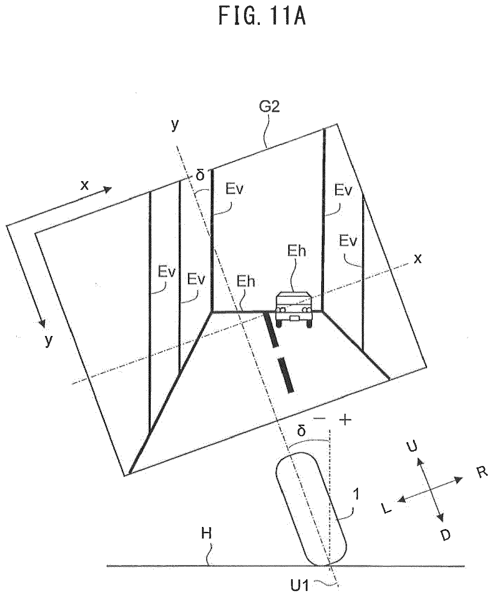

Fig. 4 is a drawing for describing an inclination angle of the vehicle 1. In Fig. 4, Arrow L indicates a leftward direction of the vehicle. Arrow R indicates a rightward direction of the vehicle. Arrow U indicates an upward direction of the vehicle. Arrow D indicates a downward direction of the vehicle. A direction which is perpendicular to both of the vehicle's left-right direction and the vehicle's up-down direction is the vehicle's fore-aft direction. The directions indicated by these Arrows L, R, U and D are the same in Fig. 10A and Fig. 11A.

As shown in Fig. 4, an inclination angle $\delta$ is provided by an angle between a vertical-directional line V which extends in the gravitational direction and a line U1 which extends in the up-down direction of the vehicle 1. In the present embodiment, as an example, description will be made for a case where the inclination angle $\delta$ is positive (+) when the up-down direction line U1 in on the right side toward the forward traveling direction of the vehicle 1 with respect to the vertical line V; the inclination angle $\delta$ is negative (-) when the line is on the left side; and the inclination angle $\delta=0$ when the vertical line V and the up-down direction line U1 overlap with each other.

[Operation Example]

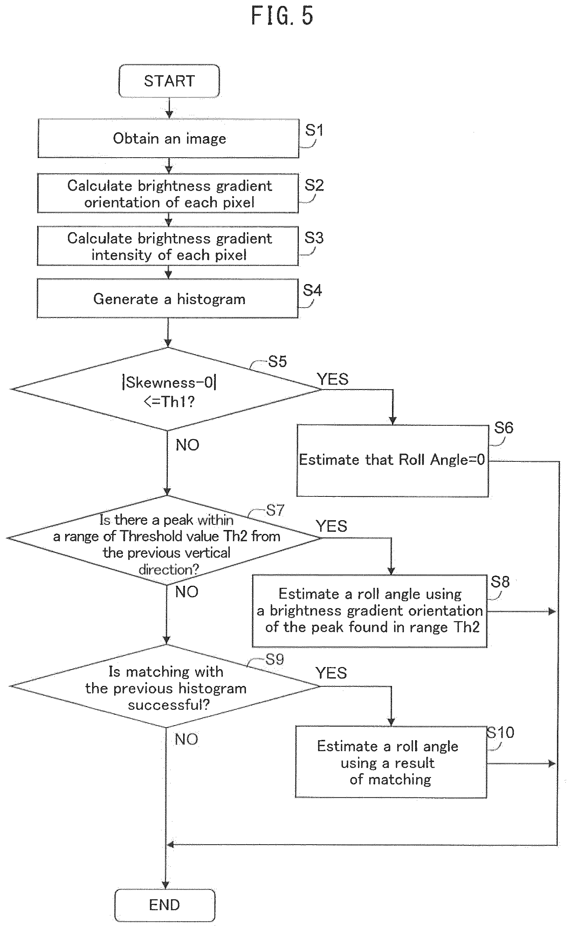

Fig. 5 is a flow chart which shows an operation example of a roll angle estimation device 20 in Fig. 2. Fig. 5 shows a case where an estimated value of the roll angle is calculated for one image out of a plurality of images which are captured in series, i.e., a plurality of frames. The roll angle estimation device 20 obtains an image (Step S1). From images taken by the imaging device 40, the roll angle estimation device 20 records data of one image in the memory 21, so as to be accessible by the processor of the roll angle estimation device 20.

<Histogram Generation Process>

In Steps S2 through S4, the histogram generator 22 uses the image data to generate a brightness gradient orientation histogram, i.e., data which indicates frequency distribution of brightness gradient orientation. In this histogram generation process, the histogram generator 22 calculates a brightness gradient orientation and a brightness gradient intensity of each pixel (Steps S2, S3).

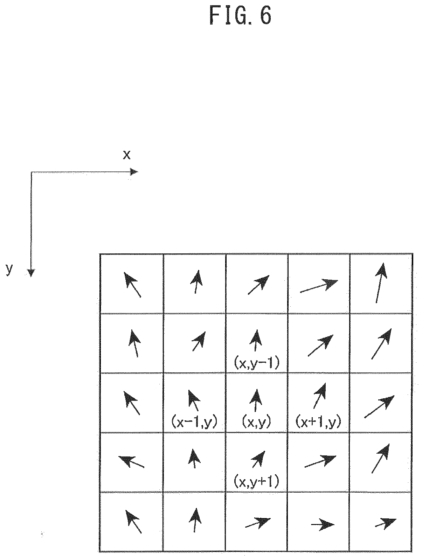

Fig. 6 shows an example of brightness gradient orientations around a pixel of focus which is located at coordinates (x,y). Herein, description will cover an example of calculating the brightness gradient orientation and the brightness gradient intensity for a pixel of focus (x,y). The histogram generator 22 obtains a brightness gradient fx (x,y) in x-direction and a brightness gradient fy (x,y) in y-direction at a location (x,y) of the pixel of focus, from brightness values of adjacent pixels which are located above and below, left and right of the pixel of focus. The brightness gradients fx (x,y) in x-direction and fy (x,y) in y-direction can be calculated with the following Mathematical Expression (2). In the following Mathematical Expression (2), L (a,b) represent pixel values at (a,b).

[Math 2]

$$\begin{cases} f_x(x,y) = L(x+1,y) - L(x-1,y) \\ f_y(x,y) = L(x,y+1) - L(x,y-1) \end{cases} \qquad (2)$$

A brightness gradient intensity m (x,y) of the pixel of focus can be calculated by placing the fx (x,y), fy (x,y) into the following Mathematical Expression (3).

[Math 3]

$$m(x,y) = \sqrt{f_x(x,y)^2 + f_y(x,y)^2} \qquad (3)$$

A brightness gradient orientation θ (x,y) of the pixel of focus can be obtained by placing the fx (x,y), fy (x,y) into the following Mathematical Expression (4).

[Math 4]

$$\theta(x,y) = \tan^{-1} \frac{f_y(x,y)}{f_x(x,y)} \qquad (4)$$

The histogram generator 22 calculates the brightness gradient orientation θ and the brightness gradient intensity m, for each of a plurality of pixels within a predetermined area in the image. Using the brightness gradient orientation θ and brightness gradient intensity m of the plurality of pixels, the histogram generator 22 generates a brightness gradient orientation histogram (Step S4 in Fig. 5).

In calculating the brightness gradient orientation, the Mathematical Expression (4) gives the brightness gradient orientation θ in terms of an angle of the image with respect to x-direction. In other words, x-direction is used as the reference axis of the image and the brightness gradient orientation is expressed as an angle with respect to the reference axis. In this case, the brightness gradient orientation θ may take a value not smaller than 0 degrees and not greater than 360 degrees. By equating an angle θ with an angle (θ+180 degrees), the histogram generator 22 is capable of generating a brightness gradient orientation histogram within a range of the angle θ (not smaller than 0 degrees and not greater than 180 degrees).

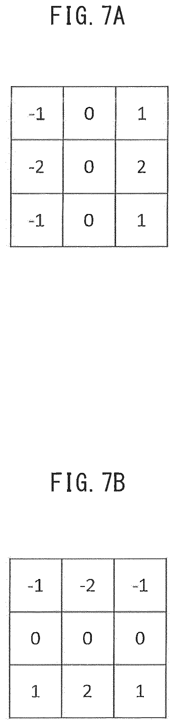

It should be noted here that the method for calculating the x-direction brightness gradient fx (x,y) and y-direction brightness gradient fy (x,y) is not limited to the example given above. For example, it is possible to calculate fx (x,y), fy (x,y) using a Sobel filter shown in Fig. 7A and Fig. 7B. Fig. 7A shows a Sobel filter used in calculating the x-direction brightness gradient, while Fig. 7B shows a Sobel filter used in calculating the y-direction brightness gradient. In this case, the x-direction brightness gradient fx (x,y) can be calculated with the following Mathematical Expression (5), and the y-direction brightness gradient fy (x,y) can be calculated with the following Mathematical Expression (6).

[Math 5]

$$fx(x, y) = \sum_{i=1}^{3} \sum_{j=1}^{3} a_{ij} L(x - 2 + i, \ y - 2 + j)$$

$$\text{\textemdash\textemdash} (5)$$

[Math 6]

$$fy(x, y) = \sum_{i=1}^{3} \sum_{j=1}^{3} b_{ij} L(x - 2 + i, \ y - 2 + j)$$

$$\text{\textemdash\textemdash} (6)$$

In the Mathematical Expression (5), aij represents a value of an element located in the i-th row of the j-th column in a 3-row, 3-column matrix in which each element shows a value of a filter shown in Fig. 7A. In the Mathematical Expression (6), bij represents a value of an element located in the i-th row of the j-th column in a 3-row, 3-column matrix in which each element shows a value of a filter shown in Fig. 7B. It should be noted here that the Sobel filter is not limited to a 3-row, 3-column filter.

In Step S4 in Fig. 5, the histogram generator 22 counts the number of pixels (frequency) having a brightness gradient orientation which falls in any of a plurality of sections defined by dividing the range of brightness gradient orientation θ (not smaller than 0 degrees and not greater than 180 degrees). The plurality of sections may be provided, for example, by quantifying the range of possible values of the brightness gradient orientation θ (not smaller than 0 degrees and not greater than 180 degrees) to a plurality of values (e.g., 0, 1, 2, ..., 180). For each section, the histogram generator 22 records the frequency or an additional value assigned for a weighted value of that frequency, in the memory 21. The frequency or the additional value in each section constitutes the brightness gradient orientation histogram which indicates the frequency distribution of brightness gradient orientation. In this process, the histogram generator 22 is capable of generating data of the frequency distribution of brightness gradient orientation for a plurality of pixels contained in a predetermined area in the image.

As an example, with the range for calculation represented by a letter r, and brightness gradient orientations to be quantified represented by A=(0, 1, 2, 3, 4, ⋯, 180), a brightness gradient orientation histogram H [r] can be calculated with the following Mathematical Expression (7). In the example shown in the following Mathematical Expression (7), a brightness gradient intensity m (x,y) is voted as a weight to each section.

[Math 7]

$$H[r] = \sum_{x,y \in r} \sum_{a \in A} \begin{cases} m(x,y) & [\theta(x,y)] = a \\ 0 & \text{otherwise} \end{cases} \quad (7)$$

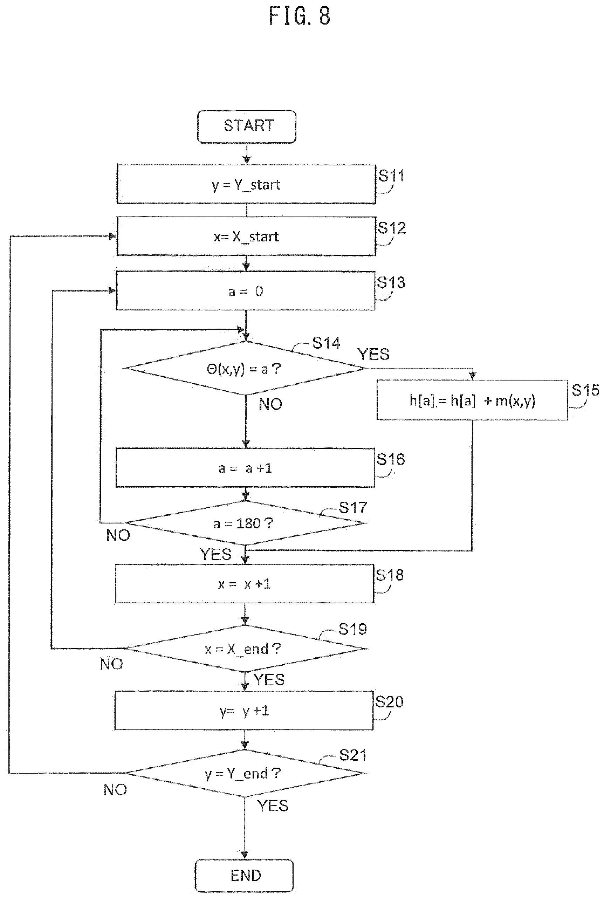

Fig. 8 is a flow chart which shows an example of a process when the histogram generator 22 performs a calculation according to Mathematical Expression (7). The histogram generator 22 initializes: a variable x which indicates an x coordinate of the pixel; variable y which indicates a y coordinate of the pixel; and a variable a which indicates each section of the brightness gradient orientation (Steps S11, S12, S13). In Fig. 8, X_start is an initial value of x, while Y start is an initial value of Y. It should be noted here that the process shown in Fig. 8 is a process of generating a brightness gradient orientation histogram for pixels contained in an area defined by x=[X_start, X_end], y=[Y_start, Y_end].

In the pixel of focus at coordinates (x,y), if the brightness gradient orientation θ (x,y) is identical with a (Step S14: YES), the histogram generator 22 adds the brightness gradient intensity m (x,y) to a frequency value h(a) of the section representing that a (Step S15). In other words, the brightness gradient intensity is voted as a weight. If the brightness gradient orientation θ (x,y) is not identical with a (Step S14: NO), one is added to a (Step S16), i.e., determination at Step S14 is executed. Thus, a weighted value based on the brightness gradient intensity is voted to a corresponding one of the values (a=0, 1, 2, 3, ···180) of the quantified brightness gradient orientation. It should be noted here that Step S14 determines whether or not θ(x,y) and a are identical with each other; however, in cases where a indicates an area of a section, a determination is made on whether or not θ (x,y) is included in the section indicated by a.

Once the voting process is complete for a pixel of focus (YES in Step S17 or end of Step S15), the variable x is increased by the value of one (Step S18), and again a voting process is performed for a pixel indicated by Steps S13 through S17. When the variable x reaches its upper limit value X_end (Step S19: YES), the variable y is increased by a value of one (Step S20), and then voting processes are performed for a row of pixel group indicated by Step S12 through S19. When the variable y reaches its upper limit value Y_end (Step S21: YES), the process comes to an end.

Following the process shown in Fig. 8, for each of the values (a=0, 1, 2, 3, ··· 180) of the quantified brightness gradient orientation θ, a value h(a) is generated as a value which includes added brightness gradient intensity value of the corresponding pixel, and is recorded as data which indicates frequency distribution, i.e., a brightness gradient orientation histogram. It should be noted here that histogram generation process it not limited to the example described above. For example, the above-described plurality of sections defined by dividing a range into which the brightness gradient orientation θ can fall may be sections each having a range (such as 0 through 1.4 degrees, 1.5 through 2.4 degrees, 2.5 through 3.4 degrees,... 179.4 through 180 degrees). Also, each section in the brightness gradient orientation histogram may not have a weighted value but have a frequency value itself.

<Roll Angle Estimation Process when Skewness is Zero>

Once the histogram generator 22 generates a brightness gradient orientation histogram in Step S4 in Fig. 5 as described above, the estimation section 23 calculates a skewness in the brightness gradient orientation histogram and checks whether or not the skewness is zero (Step S5).

Herein, as an example, description will be made for a case where Step S2 makes calculation of the brightness gradient orientation ($\theta 1$, $\theta 2$, ..., $\theta n$, hereinafter indicated as $\theta i$ (i=1, 2, ... n)) for each of n pixels contained in the image. In the skewness calculation in Step S5, the estimation section 23 calculates an arithmetic average of as many as n brightness gradient orientations $\theta i$, i.e., $\theta \mu = (1/n) \cdot (\sum \theta i)$ and a standard deviation $s = [(1/n) \cdot \{\sum (\theta i - \theta \mu)^2\}]_{(1/2)}$. Then the estimation section 23 places these n, $\theta \mu$ and s into the above-described Mathematic Expression (1), to obtain a skewness Sk.

The estimation section 23 determines whether or not the skewness Sk is within a predetermined range Th1 with respect to zero. For example, the estimation section 23 determines if |Sk-0|<=Th1. Th1 may be set to a value of zero or a value which is small enough to be regarded as zero. This enables the estimation section 23 to determine if the skewness Sk is zero or not.

If the skewness Sk is within the predetermined range Th1 with respect to zero (Step S5: YES), the estimation section 23 estimates that the roll angle α is zero degrees (Step S6). The estimation section 23 outputs a value (α=0) of the roll angle.

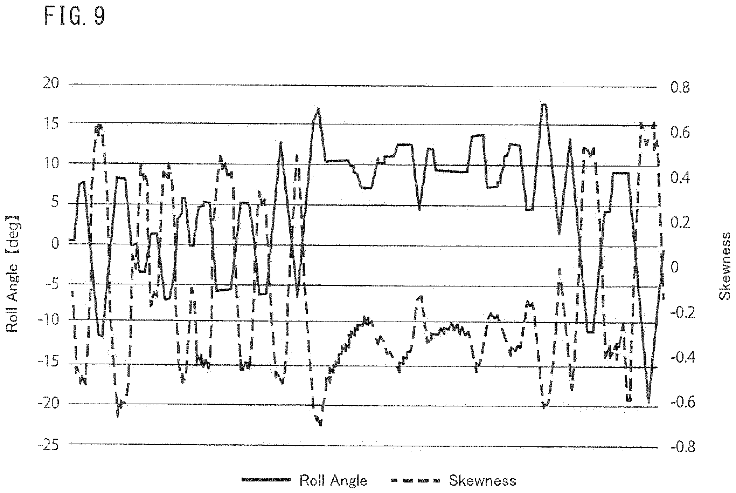

The inventor has made careful observations on time-course changes of the roll angle of the imaging device 40 mounted on the vehicle 1 and time-course changes of the skewness calculated from the brightness gradient orientation histogram of the captured image, and found that they are in a characteristic relationship. Fig. 9 is a graph which shows an example of the relationship between the roll angle and the skewness. In Fig. 9, the horizontal axis represents time, while the vertical axis represents skewness and roll angle. From the graph shown in Fig. 9, it is learned that when the roll angle is zero degrees, the skewness calculated from the brightness gradient orientation histogram becomes zero. When this relationship is used by the estimation section 23 in determination whether or not the skewness Sk is zero in an arrangement for roll angle estimation, accurate roll angle estimation becomes possible.

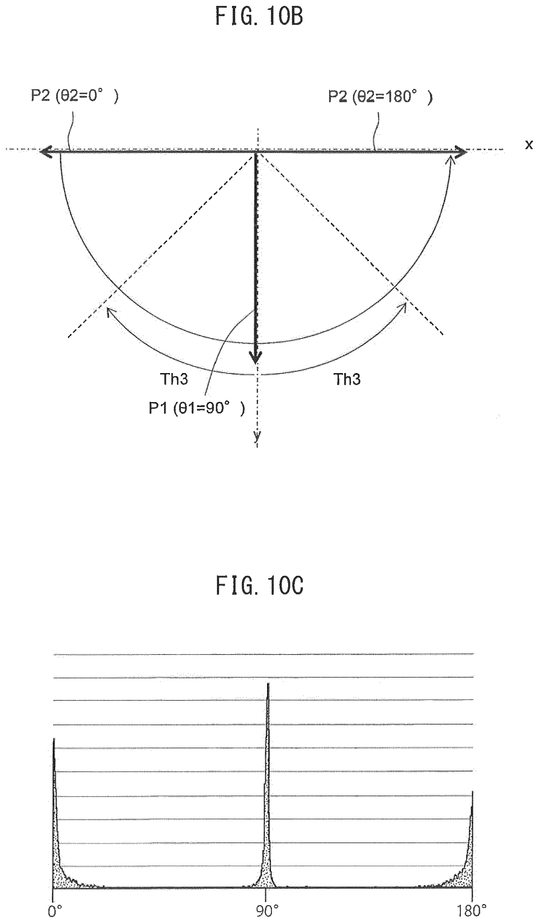

Fig. 10A shows an example relationship between an image and an inclination of the vehicle 1, where the image was taken when the vehicle 1 had an inclination angle of zero degrees in its left-right direction, i.e., when the imaging device 40 had a roll angle of zero degrees. Fig. 10B shows an example of the two peaks which are detected in the image shown in Fig. 10A. Fig. 10C shows an example of brightness gradient orientation histogram calculated for an image shown in Fig. 10A.

In the example shown in Fig. 10A, the vehicle 1 does not have an inclination to its left-right direction and therefore, lines of vertical-direction (the gravitational-direction) edges Ev of objects captured in the image G1 extend in the direction perpendicular to the x-direction of the image G1. Lines of horizontal-direction edges Eh, which are perpendicular to the vertical direction, extend in the same direction as the x-direction of the image G1.

Fig. 10B shows angles, with respect to the x-direction, of the two peaks P1, P2, which are detected from a brightness gradient orientation histogram of the image G1 shown in Fig. 10A as having mutually perpendicular brightness gradient orientations. In Fig. 10B, the peaks P2 which have brightness gradient orientations of θ2=0 degrees and 180 degrees represent vertical-direction edges Ev in the image G1 of Fig. 10A. In Fig. 10B, the peak P1 which has a brightness gradient orientation of θ1=90 degrees represents horizontal-direction edges Ev in the image G1 in Fig. 10A. As described, the edge directions in the image and the brightness gradient orientation cross with each other at a right angle. As has been described earlier, 0 degrees and 180 degrees may be equated with each other.

Fig. 10C shows an example, where the brightness gradient orientation histogram is left-right symmetrical for an axis of symmetry provided by a line which represents a brightness gradient orientation=90 degrees. This brightness gradient orientation histogram has peaks at zero degrees, 90 degrees and 180 degrees. Therefore, the skewness calculated from this brightness gradient orientation histogram has a value of zero. Since the skewness is zero, the estimation section 23 will estimate that the roll angle, i.e., the inclination angle of the vehicle 1, is zero degrees.

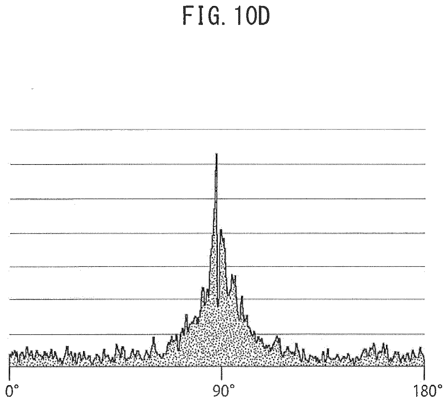

Fig. 10D shows another example of brightness gradient orientation histogram when a roll angle is zero. Fig. 10D shows a brightness gradient orientation histogram when the image contains fewer vertical-direction edges but there are more horizontal-direction edges than others. If an image contains a horizon, for example, with only a small number of buildings and other artificial objects, such a brightness gradient orientation histogram as shown is calculated. This brightness gradient orientation histogram has a peak at 90 degrees. This brightness gradient orientation histogram, too, is left-right symmetrical for an axis of symmetry provided by a line which represents a brightness gradient orientation=90 degrees. So again, skewness is zero. As understood, the skewness can also be zero when there are peak(s) only in either horizontal-direction edges or vertical-direction edges.

In Step S5 in Fig. 5, the estimation section 23 may determine, in addition to the determination on whether or not the skewness is zero, whether or not peaks in the brightness gradient orientation histogram satisfy a predetermined condition. For example, the estimation section 23 may estimate that the roll angle is zero degrees if the skewness is zero and peaks in the brightness gradient orientation histogram satisfy a predetermined condition. The predetermined condition may be, for example, that a peak which represents zero degrees, 90 degrees or 180 degrees exceeds a threshold value Th12. As a specific example of how the predetermined condition will be used in determination, the estimation section 23 may determine if there is a peak within a predetermined range around zero degrees, 90 degrees or 180 degrees. As another example, the estimation section 23 may determine whether or not the strongest peak is within a predetermined range from zero degrees, 90 degrees or 180 degrees.

By making a determination on both of the skewness and a peak in the brightness gradient orientation histogram as described, it becomes possible to further improve estimation accuracy. For example, as a rare case, the roll angle is not zero degrees while the skewness is zero. Such can occur when, for example, there are strong edges other than vertical-direction edges or horizontal-direction edges. By making the estimation section 23 determine whether or not a predetermined range from zero degrees, 90 degrees or 180 degrees includes the strongest peak or a peak having a higher intensity than a threshold value Th12, it becomes possible to avoid erroneous roll angle estimation.

<Roll-Angle Estimation Process using Past Results of Image Processing>

If Step S5 gives NO, i.e., when it is determined that the skewness is not zero, the estimation section 23 uses a peak of vertical-direction edges or horizontal-direction edges in an image in the past, as a basis for selecting a peak which represents current vertical-direction edges or horizontal-direction edges (Step S7). Specifically, the estimation section 23 obtains a brightness gradient orientation of a peak of vertical-direction edges or horizontal-direction edges (in the present example, vertical-direction edges are used) identified in a past image. The estimation section 23 selects, from the current brightness gradient orientation histogram, a peak which has a brightness gradient orientation that makes an angle difference not exceeding a threshold value from the obtained brightness gradient orientation. Using a brightness gradient orientation of the selected peak, the estimation section 23 estimates a current roll angle (Step S8).

The estimation section 23 is capable of performing, for example, an extreme value detection process to the brightness gradient orientation histogram, to detect peaks. As a specific example, a section having a greater count (frequency) than a predetermined threshold value may be detected as a peak section in the brightness gradient orientation. Another example may be to compare a peak value (peak strength) with a predetermined threshold value to determine success or failure of a peak detection. For example, there may be an arrangement that if the peak has a value which is smaller than a threshold value, the estimation section 23 determines that the result is invalid and will not treat this peak as a peak in the later part of the process.

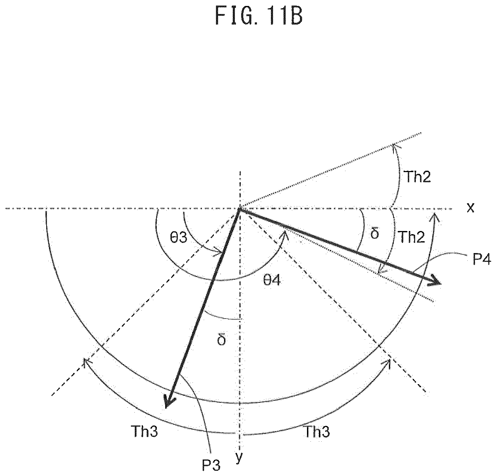

Fig. 11A shows an example relationship between an image and an inclination of the vehicle 1 where the image was taken when the vehicle 1 had an inclination angle which was not zero degrees in its left-right direction. Fig. 11B shows an example of the two peaks which are detected in the image shown in Fig. 11A. In the example shown in Fig. 11A, an up-down direction line U1 of the vehicle 1 has an inclination of angle δ to the left (minus side) with respect to the gravitational direction (the vertical direction). Therefore, lines of the vertical-direction edges Ev of objects captured in image G2 are inclined by the angle δ with respect to y-direction of the image G2. Lines of the horizontal-direction edges Eh are inclined by the angle δ with respect to the x-direction of the image G2.

Fig. 11B shows angles of the two peaks P3, P4 which are detected from a brightness gradient orientation histogram of the image G2 shown in Fig. 11A, with respect to the x-direction of the image. The peaks P3, P4 have brightness gradient orientations which are perpendicular to each other. In Fig. 11B, the peak P3 which has a brightness gradient orientation of θ3 represents horizontal-direction edges Eh in the image G2 of Fig. 11A. In Fig. 11B, the peak P4 which has a brightness gradient orientation of θ4 represents vertical-direction edges Ev in the image G2 of Fig. 11A.

The brightness gradient orientation histogram of the image G2 shown in Fig. 11A does not give a skewness of zero. In this case, the peaks P3, P4 in the brightness gradient orientation histogram are not line symmetrical with each other with an axis of symmetry provided by the line representing the brightness gradient orientation=90 degrees. In such a case, the estimation section 23 determines that the skewness is not zero (Fig. 5, Step S5, NO). In this case, Step S7 is executed and the estimation section 23 selects, from those peaks in the brightness gradient orientation histogram of the target image (current frame), i.e., image G2, a peak which has an angle difference not exceeding a threshold value Th2 from the brightness gradient orientation representing the vertical-direction edges identified in an immediately preceding image (previous frame).

If the immediately preceding image (the previous frame) has a roll angle which was determined as zero degrees (for example, in a case where the previous frame is image G1 in Fig. 10A), the estimation section 23 obtains a brightness gradient orientation (θ2=180 degrees) of a peak of vertical-direction edges in the previous frame (P2 in Fig. 10B). In this case, the peak of the vertical-direction edges of the previous frame (P2 in Fig. 10B) is a peak which is in a mutually perpendicular relationship with the center peak in the brightness gradient orientation histogram (P1 in Fig. 10B). The estimation section 23 selects a peak which has a brightness gradient orientation that makes an angle with respect to the obtained brightness gradient orientation (θ2=180 degrees) not exceeding a threshold value Th2, from the brightness gradient orientation histogram of the image G2 (current frame). In the example shown in Fig. 11B, an angle (δ) made by the brightness gradient orientation θ4 of the peak P4 and θ2(=180 degrees) of the peak P2 (see Fig. 10B) does not exceed the threshold value Th2. Therefore, peak P4 is selected as the peak representing the vertical-direction edges.

If the immediately preceding image (the previous frame) is determined as not having a roll angle of zero degrees, the estimation section 23 may select a peak which has an angle from a brightness gradient orientation of a peak of vertical-direction edges in the brightness gradient orientation histogram of the previous frame not exceeding a threshold value Th2, from the brightness gradient orientation histogram of the target image (current frame).

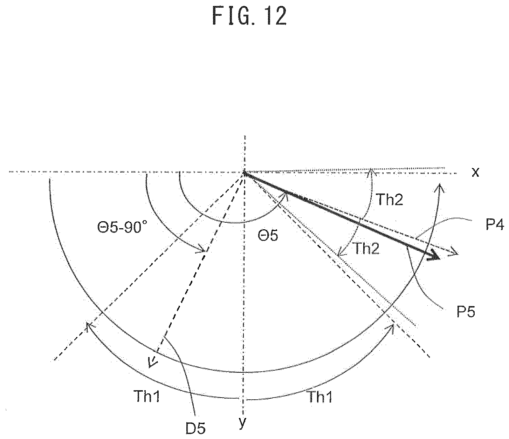

A specific example is explained with reference to Fig. 12. Fig. 12 shows another example of the brightness gradient orientation of Peak P5 detected in the target image (current frame). The description here will be made for a case where the image immediately preceding the target image (the previous frame) is provided by the image G2 shown in Fig. 11A. In the image G2, a determination is made that the roll angle is not zero degrees. Fig. 12 also shows a brightness gradient orientation of the peak P4 detected in the previous frame in a broken line. If, for example, an image contains only a limited number of horizontal-direction edges, there is a small number in the frequency of brightness gradient orientation which represents the horizontal-direction edges, and a peak which represents the horizontal-direction edges will not be detected in the brightness gradient orientation histogram. In such a case, often, only one peak P5 is detected as shown in Fig. 12.

In the example shown in Fig. 12, the estimation section 23 selects Peak P5 which has a brightness gradient orientation within the range of the threshold value Th2 from the brightness gradient orientation of Peak P4 which was identified as representing the vertical-direction edges in the previous frame, as a peak which represents the vertical-direction edges in the current frame. The peak which is selected in this way is a peak that represents Peak P2 (see Fig. 10B) of vertical-direction edges in the brightness gradient orientation histogram in the image (image G1 in Fig. 10A,) where the roll angle was determined as zero degrees most recently.

In the examples shown in Fig. 10B, Fig. 11B and Fig. 12, a comparison is made between the brightness gradient orientation of the peak in the previous frame and the brightness gradient orientation of the peak in the current frame. Alternatively, the estimation section 23 may compare values obtained by converting the brightness gradient orientations into roll angles or inclination angles. Such a comparison process as the above is equivalent to the comparison process of the brightness gradient orientation.

As an example, the estimation section 23 may use an angular velocity upper limit, a threshold value Th2=$\Delta\alpha$ and a roll angle estimation result $\alpha$t-1 in the past, to determine a range of the roll angle in the current frame (a value obtained when the peak representing vertical-direction edges is converted into the brightness gradient orientation), using the following Mathematical Expression (8). The following Mathematical Expression (8) gives an upper limit value and a lower limit value of the roll angle. The threshold value Th2=$\Delta\alpha$ is calculated by using a time from the image in the previous frame to the image in the current frame. The upper limit value and the lower limit value have sometimes a cyclicity.

[Math 8]

$$\text{Where } \alpha t{-}1 \geqq 0 \qquad \left[\alpha_{t-1} - \Delta\alpha,\ \alpha_{t-1} + \Delta\alpha\right]$$

$$\text{Where } \alpha t{-}1 < 0 \qquad \left[(180 + \alpha_{t-1}) - \Delta\alpha,\ (180 + \alpha_{t-1}) + \Delta\alpha\right]$$

$$\text{————————} \ (8)$$

The estimation section 23 searches the brightness gradient orientation histogram for a peak found in the range determined by the threshold value Th2. There may be an arrangement that if a peak is detected within the range, the estimation section 23 checks a value (strength) of the detected peak, to determine whether or not the peak should be taken as a peak which represents the vertical-direction edges.

It should be noted here that target of comparison to the current frame is not limited to the immediately preceding frame; the frame older than 2 or more frames may be used as the target of comparison to the current frame.

The above example is a process that a peak representing vertical-direction edges is selected in Step S7. Alternatively to this, the estimation section 23 may select a peak representing horizontal-direction edges, or select both, i.e. the peak representing vertical-direction edges and the peak representing horizontal-direction edges. Also, there may be an arrangement that the estimation section 23 makes a search for one of a peak representing vertical-direction edges or a peak representing horizontal-direction edges, and if unsuccessful, makes a search for the other. Based on a brightness gradient orientation of the selected peak, the estimation section 23 estimates a roll angle (Step S8).

In Step S8, the estimation section 23 makes use of a brightness gradient orientation of the peak selected in Step S7, as an orientation of the vertical-direction edges or horizontal-direction edges in calculation of a roll angle of the imaging device 40.

In the present example, the brightness gradient orientation $\theta$ of the peak selected in Step S7 indicates an angle of the vertical-direction edges or of the horizontal-direction edges with respect to the x-direction in the image. In this case, the estimation section 23 may convert, as an example, the brightness gradient orientation $\theta$ into a value which indicates an angle of the up-down direction line of the imaging device 40 (namely, the up-down direction line of the vehicle 1) with respect to the gravitational direction, and use it as an estimated value of the roll angle. This is an example in which the roll angle of the imaging device 40 is expressed in the same way as the inclination angle of the vehicle 1, namely as an angle of the up-down direction line of the imaging device 40 with respect to the vertical direction (the gravitational direction) (with positive values meaning right-hand side while negative values meaning left-hand side toward the forward traveling direction).

In whichever case where the brightness gradient orientation $\theta$ of the peak selected in Step S7 represents vertical-direction edges and where it represents horizontal-direction edges, it is possible for the estimation section 23 to convert the brightness gradient orientation $\theta$ into an estimated value of the roll angle. For example, the inventor has already found that the inclination angle with respect to the gravitational direction of a normally traveling vehicle 1 is not likely to become greater than a certain value. Based on this finding, the inventor came to an idea of setting a threshold value Th3 (example of the third threshold value) to an inclination of the vehicle's inclination angle, namely, the imaging device's roll angle with respect to the gravitational direction. The estimation section 23 compares the threshold value Th3 with the selected brightness gradient orientation $\theta$, and thereby determines which of the horizontal direction and the vertical direction the brightness gradient orientation $\theta$ belongs.

Specifically, if an angle (deviation) between the brightness gradient orientation $\theta$ and the vertical axis (y axis) of the image is smaller than the threshold value Th3, the estimation section 23 may determine that the brightness gradient orientation $\theta$ is the brightness gradient orientation which represents horizontal-direction edges, and determine an estimated value of the roll angle. If the angle (deviation) between the brightness gradient orientation $\theta$ and the vertical axis (y axis) of the image is greater than the threshold value Th3, the estimation section 23 may determine that the brightness gradient orientation $\theta$ is the brightness gradient orientation which represents vertical-direction edges, and determine an estimated value of the roll angle.

In the present embodiment, if the brightness gradient orientation $\theta$ is between (90-Th3) and (90+Th3), i.e. (90-Th3<$\theta$<90+Th3), the estimation section 23 determines that the brightness gradient orientation $\theta$ is the brightness gradient orientation which represents vertical-direction edges. Fig. 11B shows an example where Peak P3 has a brightness gradient orientation $\theta$3 of (90-Th3<$\theta$3<90+Th3). In this case, the roll angle $\alpha$ is calculated as $\alpha$=$\theta$3-90.

If the brightness gradient orientation $\theta$ is smaller than (90-Th3) or greater than (90+Th3), i.e. (0<90-Th3 or 90+Th3<$\theta$), the estimation section 23 determines that the brightness gradient orientation $\theta$ is the brightness gradient orientation which represents vertical-direction edges. Fig. 11B shows an example where Peak P4 has a brightness gradient orientation $\theta$4 of (90+Th3<$\theta$4). In this case, the roll angle $\alpha$ is calculated as $\alpha$=$\theta$4-180. It should be noted here that if $\theta$4<90-Th3, the roll angle $\alpha$ is calculated as $\alpha$=$\theta$4.

In this way, the estimation section 23 may take the brightness gradient orientation θ of the peak selected in Step S7 as the value which indicates the inclination (angle) of the horizontal-direction edges or vertical-direction edges with respect to the reference axis in the image, and convert this value into an inclination (angle) of the roll angle with respect to the reference axis.

As an example, if the threshold value Th3 is given as 45 degrees, then the peak brightness gradient orientation θ can be converted into the roll angle α (=vehicle's inclination angle), using the following Mathematical Expression (9):

[Math 9]

$$\alpha = \begin{cases} \theta - 180 & \theta > 135 \ \ (\text{Vertical: Negative Roll Angle}) \\ \theta & \theta < 45 \ \ (\text{Vertical: Positive Roll Angle}) \\ \theta - 90 & \text{otherwise} \ \ (\text{Horizontal}) \end{cases} \qquad (9)$$

<Roll-Angle Estimation Process using Past Brightness Gradient Orientation Histogram>

If Step S7 in Fig. 5 fails to select a peak that satisfies the condition (Step S7: NO), the estimation section 23 performs shape matching between a past brightness gradient orientation histogram and the current brightness gradient orientation histogram (Step S9). Using a result of the matching, the estimation section 23 calculates a roll angle displacement from the past to current, and estimates a current roll angle from the roll angle displacement and the past roll angle (Step S10).

As described, even if Step S5 determines that the skewness is not zero and then Step S7 fails to detect a peak, it is possible with Step S9 to track the vertical direction through matching of brightness gradient orientation histograms. For example, in cases where an image contains a fewer vertical-direction edges and horizontal-direction edges than edges in other directions, it is likely that peaks of brightness gradient orientations which represent the vertical direction and the horizontal direction are not distinctive in a brightness gradient orientation histogram. In such a case, if there are peaks which represent edges in other directions in a series of a plurality of images, it is possible, through matching, to identify a matching relationship of the peaks in the series of the plurality of images. By using the peak matching relationship in the plurality of images, it is possible to calculate a roll angle displacement in the series of the plurality of images. Hence, roll angle estimation is also possible, in addition to cases where the image contains more horizontal-direction edges and more vertical-direction edges than others, and where the image contains more edges in only one of the categories than others, in cases where the image contains less edges in both the categories than others.

The estimation section 23 performs matching between, for example, a shape of the brightness gradient orientation histogram in the previous frame and a shape of the brightness gradient orientation histogram in the current frame. In the matching process, the estimation section 23 compares, for example, position and strength of one or more peaks in the brightness gradient orientation histogram of the previous frame with one or more peaks in the brightness gradient orientation histogram of the current frame. The estimation section 23 calculates a result of the comparison in the form of a score which indicates a degree of matching of a peak distribution. Then, relative positional relationship in angular direction between the brightness gradient orientation histogram of the previous frame and the brightness gradient orientation histogram of the current frame is changed, and the comparison and the calculation of scoring is repeated. Through this process, a relative positional relationship which gives a better score is determined. In other words, the angle between the brightness gradient orientation histograms of the previous frame and of the current frame is varied and a degree of peak matching is evaluated to find an angular displacement which gives the best match. This gives an amount of angular displacement between the previous frame and the current frame. The estimation section 23 can calculate this amount of angular displacement as a roll angle displacement from the previous frame.

The estimation section 23 outputs the roll angle estimated in Step S6, S8 or S10. While there is no specific limitation to the mode of outputting the calculated roll angle, recording may be made, for example, in a storage device accessible by the vehicle controller 50. For example, values of the roll angle α may be recorded in association with identifiers or times, etc. of the images. Also, the roll angle estimation device 20 may notify data which indicates the roll angle to the vehicle controller 50.

With the process shown in Fig. 5 as the above, it is possible to estimate, solely from information contained in taken images, a roll angle of the imaging device 40 and an inclination angle of the vehicle 1. In other words, a roll angle estimation depending only on image is now possible, which no longer requires parameter adjustment for each vehicle 1 for example. Also, roll angle estimation accuracy is not very much affected by vibration of the traveling vehicle 1.

(Embodiment 2)

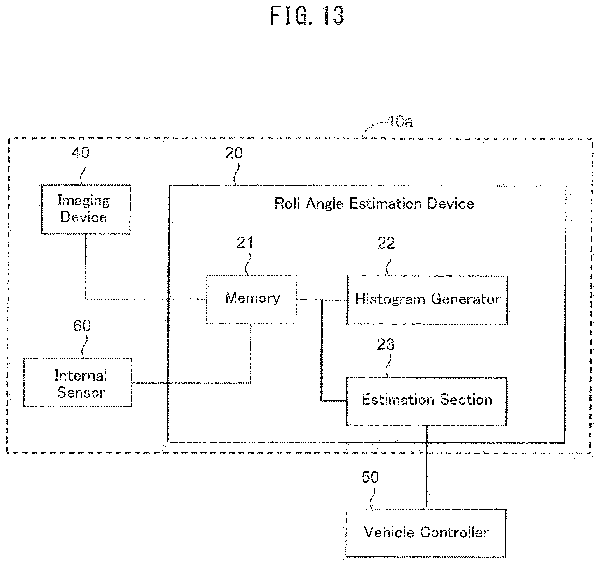

Fig. 13 is a function block diagram which shows an arrangement example of the vehicle roll angle estimation system 10a in Embodiment 2. The vehicle roll angle estimation system 10a can be mounted on the vehicle 1 as shown in Fig. 1. In Fig. 13, the same components as found in Fig. 2 are indicated with the same reference symbols. The vehicle roll angle estimation system 10a shown in Fig. 13 is the arrangement shown in Fig. 2, with an addition of an internal sensor 60.

The internal sensor 60 may be provided by, for example, a gyro sensor, an acceleration sensor or a combination of these. The internal sensor 60 outputs an inclination angle of the vehicle 1 and records it in the memory 21. Or, by using sensor information from the internal sensor 60, the estimation section 23 can calculate an inclination angle of the vehicle or a roll angle of the imaging device 40. For example, in cases where the internal sensor 60 includes a gyro sensor, it is possible to calculate the inclination angle of the vehicle 1 based on a roll rate (angular velocity) outputted from the gyro sensor. In cases where the internal sensor 60 includes an acceleration sensor, it is possible to calculate the inclination angle of the vehicle 1 using G from the acceleration sensor.

By using the inclination angle of the vehicle 1 detected by the internal sensor 60, the estimation section 23 can make a complement of the roll angle estimated by the estimation section 23. The estimation section 23 may use the inclination angle detected by the internal sensor 60 as the vehicle's inclination angle in cases where it was impossible to estimate a roll angle based on the brightness gradient orientation histogram obtained from the image.

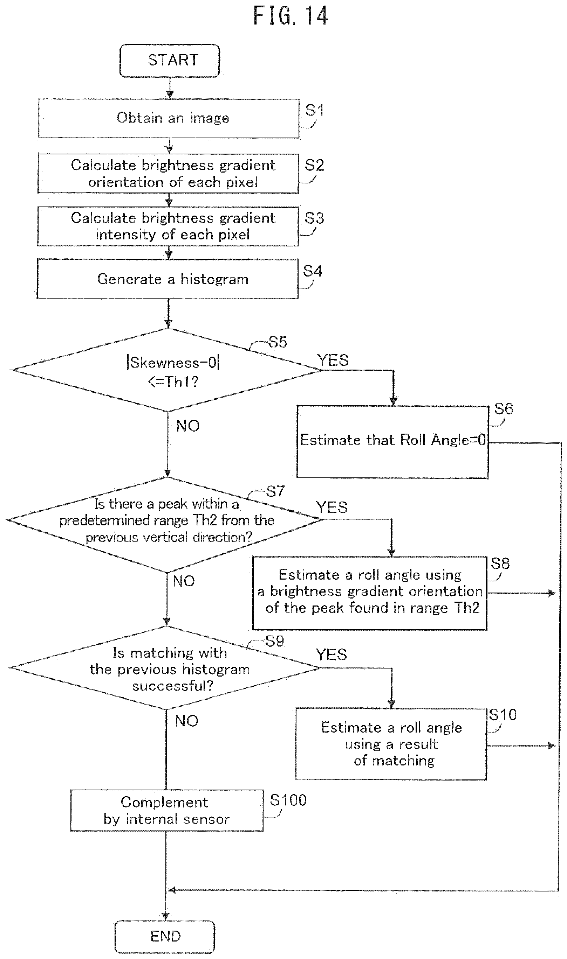

Fig. 14 is a flow chart which shows an operation example of a roll angle estimation device 20 in Fig. 13. In Fig. 14, it is possible to execute Step S1 through S10 in a similar way as Step S1 through S10 in Fig. 5. When Step S9 finds that the matching of brightness gradient orientation histograms was unsuccessful (Step S9: NO), the estimation section 23 reads out an inclination angle detected by the internal sensor 60 from the memory 21 and makes it a roll angle of the imaging device 40.

In cases where the internal sensor 60 includes a gyro sensor and other sensors (e.g., acceleration sensor), the estimation section 23 may first use, in Step S100, an angular velocity which is obtained from the gyro sensor to calculate an inclination angle of the vehicle 1 or a roll angle of the imaging device 40. If this roll angle calculation is made within a predetermined time from the execution of the process in Step S5, the estimation section 23 may skip complementation based on information from the acceleration sensor, and ends the process. If the predetermined time has elapsed, the estimation section 23 executes the complementation process as well, using the information from the acceleration sensor. The angular velocity obtained from the gyro sensor is a useful piece of information with a reasonably small range of error if utilized within a short period of time. Therefore, there may be an arrangement that the estimation section 23 selects, depending on the time elapsed during the estimation process, between performing complementation based on information only from the gyro sensor and performing complementation using information from other sensors as well.

Also, by using the inclination angle of the vehicle 1 detected by the internal sensor 60, the estimation section 23 can verify the roll angle of the imaging device 40 estimated by the estimation section 23. For example, in a case where the estimation section 23 estimated a roll angle $\alpha$ of the imaging device 40 as $\alpha=A$, there may be a verification process to see if a difference between $\alpha=A$ and an inclination angle detected by the internal sensor is within a predetermined range, for determination that $\alpha=A$ is correct. If the difference of the inclination angle is out of the predetermined range, the process can determine that $\alpha=A$ is not correct. As an example, if a roll angle $\alpha=A$ which was estimated in Step S6 is determined to be faulty, then the estimation section 23 may use other means such as tracking on the vertical-direction components (Step S7) or histogram matching (Step S9) to estimate an inclination angle for further verification.

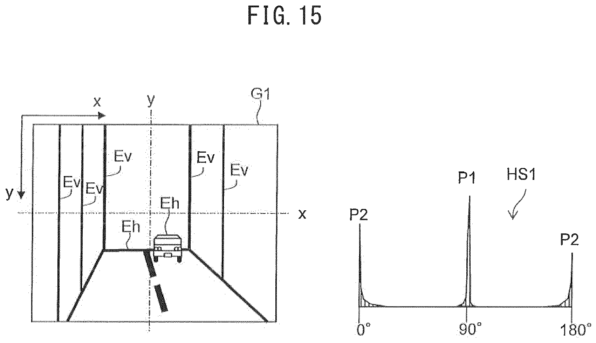

Fig. 15 through Fig. 18 show an example of roll angle estimation using a vehicle roll angle estimation system according to Embodiment 1 or Embodiment 2 described above. Fig. 15 through Fig. 18 show images G1 through G4 as examples of images inputted to the vehicle roll angle estimation system. The images G1 through G4 are examples of images obtained when the imaging device 40 takes forward images from the vehicle 1 while the vehicle 1 is moving. Fig. 15 through Fig. 18 show brightness gradient orientation histograms HS1 through HS4, which are brightness gradient orientation histograms of the images G1 through G4 respectively.

The image G1 in Fig. 15 is an image which was taken when the vehicle 1 was not inclined to its left-right direction with respect to the traveling direction, namely, when inclination angle of the vehicle 1 in the left-right direction was zero. The image G1 contains more vertical-direction edges Ev and horizontal-direction edges Eh than those in other directions. Therefore, the brightness gradient orientation histogram HS1 shows Peak P2 which represents the horizontal-direction edges Eh, and Peak P1 which represents the vertical-direction edges Ev. When the vehicle 1 is not inclined to the left-right direction, these Peaks P1 and P2 become symmetrical with each other in the brightness gradient orientation histogram. Hence, a skewness of the brightness gradient orientation histogram of the image G1 is calculated as zero. In this case, an inclination angle $\delta$ of the vehicle 1, i.e., a roll angle $\alpha$ of the imaging device 40 is estimated as zero.

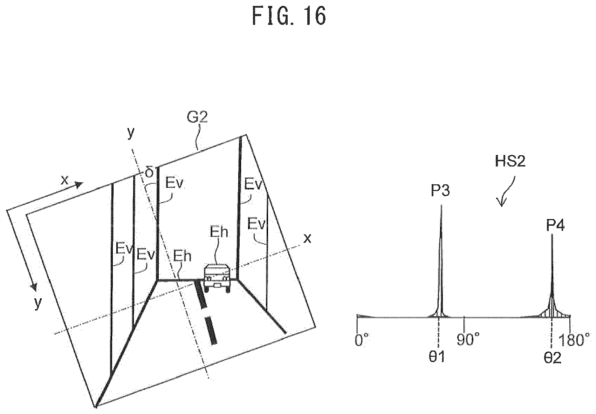

The image G2 in Fig. 16 is an image which was taken when the vehicle 1 was not inclined to its left-right direction with respect to the traveling direction, namely, when inclination angle of the vehicle 1 in the left-right direction was not zero. The image G2 contains more vertical-direction edges Ev and horizontal-direction edges Eh than those in other directions. Therefore, the brightness gradient orientation histogram HS2 shows Peak P3 which represents the horizontal-direction edges Eh, and Peak P4 which represents the vertical-direction edges Ev. When the vehicle 1 is inclined to the left-right direction, these Peaks P3 and P4 become unsymmetrical with each other in the brightness gradient orientation histogram. Hence, a skewness of the brightness gradient orientation histogram of the image G2 does not become zero. In this case, for example, the latest image for which a skewness was calculated as zero in the past (image G1, for example) is utilized and Peaks P3, P4 in the image G2 are identified as representing Peaks P1, P2. It is possible to estimate an inclination angle $\delta$ of the vehicle 1 by using at least one of brightness gradient orientation 01 of Peak P3 or $\theta$2 of Peak P4 in the brightness gradient orientation histogram HS2 in the image G2.

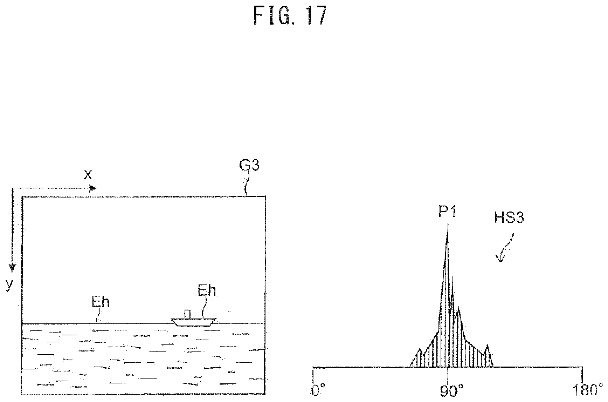

The image G3 in Fig. 17 is an example where the vehicle 1 is marine vehicle. The image G3 is an image which was taken when the vehicle 1 was not inclined to its left-right direction with respect to the traveling direction, namely, when inclination angle of the vehicle 1 in the left-right direction was not zero. The image G3 contains more horizontal-direction edges Eh than edges in other directions, with very few vertical-direction edges. In a brightness gradient orientation histogram HS3 for the image G3, Peak P1 representing the horizontal-direction edges Eh is located at the center. The brightness gradient orientation histogram HS3 gives a skewness of zero. In this case, an inclination angle $\delta$ of the vehicle 1, i.e., a roll angle $\alpha$ of the imaging device 40 is estimated as zero.

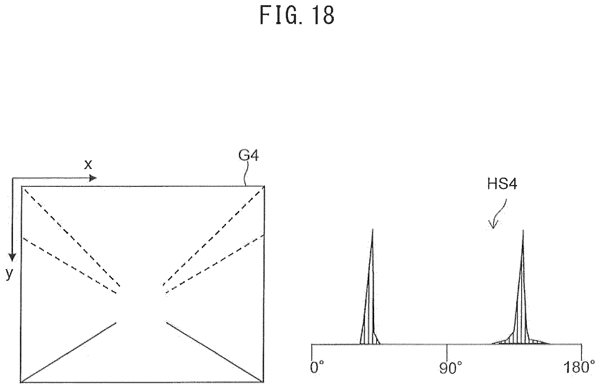

The image G4 in Fig. 18 is an image which was taken when the vehicle 1 was not inclined to its left-right direction with respect to the traveling direction, namely, when inclination angle of the vehicle 1 in the left-right direction was not zero. In the image G4, there are more edges which are inclined to the left by approximately 45 degrees with respect to the y axis and edges which are inclined to the right by approximately 45 degrees with respect to the y axis than edges in other directions. The image G4 contains very few horizontal-direction edges or vertical-direction edges. The image G4 gives the brightness gradient orientation histogram HS4, where peaks representing each of the edges are symmetrically located. This gives a skewness of zero. In this case, an inclination angle $\delta$ of the vehicle 1, i.e., a roll angle $\alpha$ of the imaging device 40 is estimated as zero. As exemplified, if an image contains as many edges which have a +45 degrees as those which have a -45 degrees with respect to the y axis (vertical axis), with fewer edges in other directions, the brightness gradient orientation histogram gives a skewness of zero.

According to the Embodiments described thus far as the above, it is possible to highly accurately estimate that the roll angle is zero when the brightness gradient orientation histogram has a skewness of zero. By detecting the roll angle=0 when the skewness=0, it is possible to use information for the case where the roll angle=0 in subsequent roll angle estimation, measurement or vehicle control related to roll angle. For example, when the skewness=0, it is possible to reset roll angles in internal sensors such as IMU to zero.

Thus far, embodiments of the present teaching have been covered, but embodiments of the present teaching are not limited to those described above. For example, the vehicle roll angle estimation system according to the present teaching is not limited in its application to motorcycles. The vehicle roll angle estimation system according to the present teaching may also be applied to straddled type vehicles other than motorcycles (such as bicycles, auto tricycles, LMWs (Leaning Multi Wheels), automobiles, snowmobiles, ATVs (All Terrain Vehicles)), electric trains, steam trains, marine vehicles (personal watercrafts), boats and ships, aircrafts, helicopters, and drones (remotely controlled or autonomously controlled unmanned aircrafts). It should be noted here that the term straddled vehicles mean vehicles in general in which the operator of the vehicle makes a ride on the vehicle as if making a ride on a horse. Straddled vehicles include scooter-type vehicles, too. The present teaching is also applicable to those vehicles other than the straddled type. The present teaching is applicable to leaning type vehicles which are inclinable to the left-right directions. The present teaching is applicable suitably to such a vehicle which inclines to left and right when making turns, i.e., vehicles which lean when making turns. The leaning type vehicles incline to the left when making a left turn, and incline to the right when making a right turn.

It should be noted here that the imaging device 40 is capable of imaging rearward, not forward. Further, the optical axis of the imaging device 40 does not necessarily have to be in the vehicle's fore-aft direction. Also, the mounting location of the imaging device 40 is not limited to the front cover 15. For example, the place may be the head pipe 11, or others. The location of the roll angle estimation device 20 is not limited to the head pipe 11. Also, both of the imaging device 40 and the roll angle estimation device 20 may be mounted on the front cover 15 or on the head pipe 11. Also, the imaging device 40 and the roll angle estimation device 20 may be housed in a single case, or in different cases from each other.

Operation of the roll angle estimation device 20 is not limited to the examples shown in Fig. 5 and Fig. 14. In Fig. 5 and Fig. 14, at least one of the following may be omitted: the roll angle estimation process (Step S7 and S8) which makes use of the vertical direction identified from a previous vertical direction; or roll angle estimation process (Step S9 and S10) which makes use of a result of matching with a previous brightness gradient orientation histogram.

Skewness calculation is not limited to the method using the earlier-mentioned Mathematical Expression (1). Skewness may be calculated with other approximations for calculation of symmetricalness of brightness gradient orientation histogram. The term skewness is a value which indicates a degree of symmetricalness of the brightness gradient orientation histogram.

The process of estimating a roll angle based on a skewness of a brightness gradient orientation histogram is not limited to a process in which the roll angle is estimated as zero degrees when a skewness is within a predetermined range with respect to zero. For example, estimation section may calculate a roll angle value according to a skewness of a brightness gradient orientation histogram. The estimation section may utilize a pre-recorded function or reference data for its calculation of a roll angle which represents the calculated skewness. In this case, the function may be one which returns a roll angle value with a skewness as an argument. The reference data may, for example, be provided by data as a record of roll angle values representing various skewnesses. Also, the estimation section may utilize various other information in addition to skewness, in its roll angle estimation.

The vehicle may record or display roll angles estimated by the vehicle roll angle estimation system. Or, the vehicle may control itself by utilizing the estimated roll angles. In this case, the estimated roll angles make influence on the control state (behavior) of the vehicle. This enables grasping the estimated roll angles from the control state of the vehicle.

Any special terms used in the present Description are used for the sole purpose of describing specific embodiments, and are not used in any intention of limiting the teaching.

The wording "and/or" used in the present description indicates all possible combinations including a single element and combinations of any of a plurality of elements mentioned.

Words such as "including", "comprising", "having" and the like, when used in the present Description affirm that there is such a characteristic, step, operation, element, component and/or equivalent as was described, but do not exclude existence or addition of any one or a plurality of other characteristics, steps, operations, elements, components and/or a group(s) of these.

Words such as "mounted", "connected", "coupled" and/or terms equivalent thereto when used in the present Description are used in a wide sense, including both direct and indirect ways of mounting, connecting and coupling. Further, "connected" and "coupled" are not limited to physical or mechanical connection or coupling in whichever of direct or indirect ways, but possibly include electrical connection or coupling.

Unless otherwise defined, any terms (including technical terms and scientific terms) used in the present Description have the same meaning as understood generally by those who are skilled in the art.

Terms whose definitions can be found in dictionaries of general use should be interpreted as being used with the meaning in the context of relevant techniques and the present disclosure, and should not be interpreted in an idealism or excessive formality unless expressively so defined in the present Description.

In the Description of the present teaching, it is understood that a plurality of techniques and steps are disclosed. Each of these has individual effects, and each can be used in combination with one or more of the other techniques disclosed herein or, if applicable, can be used together with all the other techniques. For these reasons, the present Description refrains from unnecessarily repeating those individual steps in attempting to cover all possible combinations of these. Nevertheless, DESCRIPTION and CLAIMS should be read with an understanding that all of such combinations reside within the scope of the present teaching and Claims.

REFERENCE SIGNS LIST

1     Vehicle
20    Roll-Angle Estimation Device
22    Histogram Generator
23    Estimation Section
40    Imaging Device
60    Internal Sensor

**Claims**

1. A vehicle roll angle estimation system (10) to be mounted on a vehicle (1) which is inclinable to a left-right direction with respect to a traveling direction, comprising:

    an imaging device (40) capable of capturing forward or rearward images from the vehicle (1); and
    a roll angle estimation device (20) configured to obtain a plurality of images including a target image captured in series by the imaging device (40) and analyze the image, thereby estimating a roll angle of the imaging device (40) which changes as the vehicle's (1) inclination changes; wherein

the roll angle estimation device (20) includes:

a histogram generator (22) configured to generate of a brightness gradient orientation histogram which shows a frequency distribution of brightness gradient orientation of a plurality of pixels contained in the image; an estimation section (23) configured to calculate a skewness which indicates a symmetricalness of the brightness gradient orientation histogram by using $\theta i$ that represents a value of brightness gradient orientation in a plurality of pixels contained in an image, $\theta \mu$ that represents an average value of the brightness gradient orientation in the plurality of pixels, n that represents a quantity of pixels for which the brightness gradient orientation was calculated, and s that represents a standard deviation of brightness gradient orientation in the plurality of pixels, and estimating the roll angle based on the calculated skewness; the estimation section (23) is configured to estimate that the roll angle is zero degrees if the skewness is within a predetermined range with respect to zero, and, to select a peak which represents a peak of horizontal-direction edges or vertical-direction edges in a brightness gradient orientation histogram of a past image that was estimated as having the roll angle of zero degrees, from the brightness gradient orientation histogram of the target image and to estimate a roll angle in the target image based on a brightness gradient orientation of the selected peak, if the target image does not have the skewness having a value within the predetermined range with respect to zero.

2. The vehicle roll angle estimation system (10) according to Claim 1, wherein the estimation section (23) is configured to select a peak whose brightness gradient orientation has an angle from a brightness gradient orientation of a peak of horizontal-direction edges or vertical-direction edges in an image immediately preceding the target image not exceeding by a threshold value from the brightness gradient orientation histogram peak of the target image and to estimate a roll angle in the target image based on a brightness gradient orientation of the selected peak, if the target image does not have the skewness within the predetermined range with respect to zero.

3. The vehicle roll angle estimation system (10) according to Claim 1 or 2, wherein the estimation section (23) is configured to perform shape matching between a brightness gradient orientation histogram in a past image and a current brightness gradient orientation histogram in the target image, thereby calculating a roll angle displacement from the past image to the target image, and to estimate a roll angle in the target image from the roll angle displacement and a roll angle in the past image, if the target image does not have the skewness within the predetermined range with respect to zero.

4. The vehicle roll angle estimation system (10) according to one of Claims 1 through 3, wherein the histogram generator (22) is configured to equate, for any angle $\theta$ not smaller than 0 degrees and not greater than 180 degrees, the angle $\theta$ with the angle $\theta$ + 180 degrees, and thereby generates a brightness gradient orientation histogram within a range of the angle $\theta$.

5. The vehicle roll angle estimation system (10) according to one of Claims 1 through 4, wherein the histogram generator (22) is configured to weight a brightness gradient intensity of each pixel, and thereafter to add the brightness gradient orientation of each pixel to the histogram.

6. The vehicle roll angle estimation system (10) according to one of Claims 1 through 5, further comprising:

an internal sensor (60) configured to detect an inclination angle of the vehicle (1), wherein the vehicle roll angle estimation system (10) is configured to complement the roll angle which is estimated by the estimation section (23) using the inclination angle of the vehicle (1) which is detected by the internal sensor (60).

7. The vehicle roll angle estimation system (10) according to one of Claims 1 through 6, further comprising:

an internal sensor (60) configured to detect an inclination angle of the vehicle (1), wherein the vehicle roll angle estimation system (10) is configured to verify the roll angle which is estimated by the estimation section (23) using the inclination angle of the vehicle (1) which is detected by the internal sensor (60).

8. The vehicle roll angle estimation system (10) according to Claim 6,
   wherein
   the vehicle roll angle estimation system (10) is further configured to verify the roll angle which is estimated by the estimation section (23) using the inclination angle of the vehicle (1) which is detected by the internal sensor (60).

9. A vehicle (1) which is inclinable to a left-right direction with respect to a traveling direction, comprising a vehicle roll angle estimation system according to one of claims 1 to 8.

10. A vehicle roll angle estimation method for estimation, in a vehicle (1) which is inclinable to a left-right direction, of a roll angle of an imaging device (40) which changes as the vehicle's (1) inclination changes, by analyzing an image captured by the imaging device (40) capable of capturing forward or rearward images from the vehicle (1), the method comprising:

   an image obtaining step (S1) of obtaining a plurality of images including a target image captured in series by the imaging device (40),
   a histogram generation step (S4) of generating a brightness gradient orientation histogram which shows a frequency distribution of brightness gradient orientation of a plurality of pixels contained in the image;
   an estimation step (S5-S10) in which a computer calculates a skewness that indicates a symmetricalness of the brightness gradient orientation histogram by using $\theta i$ that represents a value of brightness gradient orientation in a plurality of pixels contained in an image, $\theta \mu$ that represents an average value of the brightness gradient orientation in the plurality of pixels, n that represents a quantity of pixels for which the brightness gradient orientation was calculated, and s that represents a standard deviation of brightness gradient orientation in the plurality of pixels, and estimates that the roll angle is zero degrees if the skewness is within a predetermined range with respect to zero, and selects a peak which represents a peak of horizontal-direction edges or vertical-direction edges in a brightness gradient orientation histogram of a past image that was estimated as having the roll angle of zero degrees, from the brightness gradient orientation histogram of the target image and estimates a roll angle in the target image based on a brightness gradient orientation of the selected peak, if the target image does not have the skewness having a value within the predetermined range with respect to zero.

**Patentansprüche**

1. Ein Fahrzeug-Rollwinkel-Schätzsystem (10), das an einem Fahrzeug (1) befestigt werden soll, das in Bezug auf eine Bewegungsrichtung in einer Links-Rechts-Richtung neigbar ist, das folgende Merkmale aufweist:

   eine Bilderzeugungsvorrichtung (40), die Vorwärts- oder Rückwärtsbilder von dem Fahrzeug (1) erfassen kann; und
   eine Rollwinkel-Schätzvorrichtung (20), die ausgebildet ist, um eine Mehrzahl von Bildern mit einem Zielbild, die durch die Bilderzeugungsvorrichtung (40) in Serie erfasst wurden, zu erhalten und das Bild zu analysieren, wodurch ein Rollwinkel der Bilderzeugungsvorrichtung (40) geschätzt wird, der sich verändert, wenn sich eine Neigung des Fahrzeugs (1) verändert;
   wobei:
   die Rollwinkel-Schätzvorrichtung (20) folgende Merkmale aufweist:

   einen Histogramm-Erzeuger (22), der ausgebildet ist, um ein Helligkeitsgradientenorientierungshistogramm zu erzeugen, das eine Frequenzverteilung einer Helligkeitsgradientenorientierung einer Mehrzahl von Pixeln zeigt, die in dem Bild beinhaltet sind;
   einen Schätzabschnitt (23), der ausgebildet ist, um eine Schrägheit, die einen Symmetriezustand des Helligkeitsgradientenorientierungshistogramms anzeigt, zu berechnen durch Verwenden von $\theta i$, das einen Wert einer Helligkeitsgradientenorientierung in einer Mehrzahl von Pixeln darstellt, die in einem Bild beinhaltet sind, $\theta \mu$, das einen Durchschnittswert der Helligkeitsgradientenorientierung in der Mehrzahl von Pixeln darstellt, n, das eine Menge von Pixeln darstellt, für die die Helligkeitsgradientenorientierung berechnet wurde, und s, das eine Standardabweichung der Helligkeitsgradientenorientierung in der Mehrzahl von Pixeln darstellt, sowie den Rollwinkel basierend auf der berechneten Schrägheit schätzt;
   der Schätzabschnitt (23) ausgebildet ist, um zu schätzen, dass der Rollwinkel null Grad beträgt, wenn die Schrägheit innerhalb eines vorbestimmten Bereichs in Bezug zu null liegt, und um eine Spitze, die eine Spitze von Horizontalrichtungsrändern oder Vertikalrichtungsrändern in einem Helligkeitsgradientenorientierungshistogramm eines vergangen Bilds darstellt, das als einen Rollwinkel von null Grad aufweisend geschätzt wurde, aus dem Helligkeitsgradientenorientierungshistogramm des Zielbildes auszuwählen und um einen Rollwinkel in dem Zielbild basierend auf einer Helligkeitsgradientenorientierung der ausgewählten Spitze zu schätzen, wenn das Zielbild keine Schrägheit mit einem Wert innerhalb des vorbestimmten Bereichs in Bezug zu null aufweist.

2. Das Fahrzeug-Rollwinkel-Schätzsystem (10) gemäß Anspruch 1,
bei dem der Schätzabschnitt (23) ausgebildet ist, um eine Spitze, deren Helligkeitsgradientenorientierung einen Winkel zu einer Helligkeitsgradientenorientierung einer Spitze von Horizontalrichtungsrändern oder Vertikalrichtungsrändern in einem Bild aufweist, das dem Zielbild unmittelbar vorhergeht, einen Schwellenwert nicht überschreitend, aus der Helligkeitsgradientenorientierungshistogramm-Spitze des Zielbildes auszuwählen und um einen Rollwinkel in dem Zielbild basierend auf einer Helligkeitsgradientenorientierung der ausgewählten Spitze zu schätzen, wenn das Zielbild keine Schrägheit innerhalb des vorbestimmten Bereichs in Bezug zu null aufweist.

3. Das Fahrzeug-Rollwinkel-Schätzsystem (10) gemäß Anspruch 1 oder 2,
bei dem:
der Schätzabschnitt (23) ausgebildet ist, um eine Formanpassung zwischen einem Helligkeitsgradientenorientierungshistogramm in einem vergangen Bild und einem momentanen Helligkeitsgradientenorientierungshistogramm in dem Zielbild durchzuführen, wodurch eine Rollwinkelverschiebung von dem vergangenen Bild zu dem Zielbild berechnet wird, und um einen Rollwinkel in dem Zielbild aus der Rollwinkelverschiebung und einem Rollwinkel in dem vergangenen Bild zu schätzen, wenn das Zielbild keine Schrägheit innerhalb des vorbestimmten Bereichs in Bezug zu null aufweist.

4. Das Fahrzeug-Rollwinkel-Schätzsystem (10) gemäß einem der Ansprüche 1 bis 3,
bei dem der Histogrammerzeuger (22) ausgebildet ist, um für einen beliebigen Winkel θ, der nicht kleiner als 0 Grad und nicht größer als 180 Grad ist, den Winkel θ mit dem Winkel 0 + 180 Grad gleichzusetzen, wodurch ein Helligkeitsgradientenorientierungshistogramm innerhalb eines Bereichs des Winkels θ erzeugt wird.

5. Das Fahrzeug-Rollwinkel-Schätzsystem (10) gemäß einem der Ansprüche 1 bis 4,
bei dem der Histogrammerzeuger (22) ausgebildet ist, um eine Helligkeitsgradientenintensität jedes Pixels zu gewichten und danach die Helligkeitsgradientenorientierung jedes Pixels zu dem Histogramm hinzuzufügen.

6. Das Fahrzeug-Rollwinkel-Schätzsystem (10) gemäß einem der Ansprüche 1 bis 5, das ferner folgendes Merkmal aufweist:

einen internen Sensor (60), der ausgebildet ist, um einen Neigungswinkel des Fahrzeugs (1) zu detektieren, wobei:
das Fahrzeug-Rollwinkel-Schätzsystem (10) ausgebildet ist, um den Rollwinkel, der durch den Schätzabschnitt (23) geschätzt wird, unter Verwendung des Neigungswinkels des Fahrzeugs (1) zu komplementieren, der durch den internen Sensor (60) detektiert wird.

7. Das Fahrzeug-Rollwinkel-Schätzsystem (10) gemäß einem der Ansprüche 1 bis 6, das ferner folgendes Merkmal aufweist:

einen internen Sensor (60), der ausgebildet ist, um einen Neigungswinkel des Fahrzeugs (1) zu detektieren, wobei:
das Fahrzeug-Rollwinkel-Schätzsystem (10) ausgebildet ist, um den Rollwinkel, der durch den Schätzabschnitt (23) geschätzt wird, unter Verwendung des Neigungswinkels des Fahrzeugs (1) zu verifizieren, der durch den internen Sensor (60) detektiert wird.

8. Das Fahrzeug-Rollwinkel-Schätzsystem (10) gemäß Anspruch 6,
wobei:
das Fahrzeug-Rollwinkel-Schätzsystem (10) ferner ausgebildet ist, um den Rollwinkel, der durch den Schätzabschnitt (23) geschätzt wird, unter Verwendung des Neigungswinkels des Fahrzeugs (1) zu verifizieren, der durch den internen Sensor (60) detektiert wird.

9. Ein Fahrzeug (1), das in Bezug auf eine Bewegungsrichtung in einer Links-Rechts-Richtung neigbar ist, mit einem Fahrzeug-Rollwinkel-Schätzsystem gemäß einem der Ansprüche 1 bis 8.

**10.** Ein Fahrzeug-Rollwinkel-Schätzverfahren zur Schätzung, in einem Fahrzeug (1), das in einer Links-Rechts-Richtung neigbar ist, eines Rollwinkels einer Bilderzeugungsvorrichtung (40), der sich verändert, wenn sich die Neigung des Fahrzeugs (1) verändert, durch Analysieren eines Bilds, das durch die Bilderzeugungsvorrichtung (40) erfasst wird, die Vorwärts- oder Rückwärtsbilder von dem Fahrzeug (1) erfassen kann, wobei das Verfahren folgende Schritte aufweist:

einen Bilderhalteschritt (S1) eines Erhaltens einer Mehrzahl von Bildern mit einem Zielbild, die durch die Bilderzeugungsvorrichtung (40) in Serie erfasst werden,

einen Histogrammerzeugungsschritt (S4) eines Erzeugens eines Helligkeitsgradientenorientierungshistogramms, das eine Frequenzverteilung einer Helligkeitsgradientenorientierung einer Mehrzahl von Pixeln zeigt, die in dem Bild beinhaltet sind;

einen Schätzschritt (S5-S10), bei dem ein Computer eine Schrägheit, die einen Symmetriezustand des Helligkeitsgradientenorientierungshistogramms anzeigt, berechnet durch Verwenden von $\theta\mu$, das einen Durchschnittswert der Helligkeitsgradientenorientierung in der Mehrzahl von Pixeln darstellt, n, das eine Menge von Pixeln darstellt, für die die Helligkeitsgradientenorientierung berechnet wurde, und s, das eine Standardabweichung der Helligkeitsgradientenorientierung in der Mehrzahl von Pixeln darstellt, und schätzt, dass der Rollwinkel null Grad beträgt, wenn die Schrägheit innerhalb eines vorbestimmten Bereichs in Bezug zu null liegt, und eine Spitze, die eine Spitze von Horizontalrichtungsrändern oder Vertikalrichtungsrändern in einem Helligkeitsgradientenorientierungshistogramm eines vergangenen Bilds darstellt, das als einen Rollwinkel von null Grad aufweisend geschätzt wurde, aus dem Helligkeitsgradientenorientierungshistogramm des Zielwerts auswählt und einen Rollwinkel in dem Zielbild basierend auf einer Helligkeitsgradientenorientierung der ausgewählten Spitze schätzt, wenn das Zielbild keine Schrägheit mit einem Wert innerhalb des vorbestimmten Bereichs in Bezug zu null aufweist.

**Revendications**

**1.** Système d'estimation d'angle de roulis de véhicule (10) à monter sur un véhicule (1) qui peut s'incliner dans une direction gauche-droite par rapport à une direction de déplacement, comprenant:

un dispositif d'imagerie (40) à même de capturer des images vers l'avant ou vers l'arrière du véhicule (1); et un dispositif d'estimation d'angle de roulis (20) configuré pour obtenir une pluralité d'images comportant une image cible capturée en série par le dispositif d'imagerie (40) et pour analyser l'image, estimant ainsi un angle de roulis du dispositif d'imagerie (40) qui varie au fur et à mesure que varie l'inclinaison du véhicule (1); dans lequel

le dispositif d'estimation d'angle de roulis (20) comporte:

un générateur d'histogramme (22) configuré pour générer un histogramme d'orientation de gradient de luminosité qui montre une distribution de fréquence de l'orientation de gradient de luminosité d'une pluralité de pixels contenus dans l'image;

un segment d'estimation (23) configuré pour calculer une inclinaison qui indique un état symétrique de l'histogramme d'orientation de gradient de luminosité à l'aide de $\theta i$ qui représente une valeur de l'orientation de gradient de luminosité dans une pluralité de pixels contenus dans une image, $\theta\mu$ qui représente une valeur moyenne de l'orientation de gradient de luminosité dans la pluralité de pixels, n qui représente une quantité de pixels pour lesquels a été calculée l'orientation de gradient de luminosité, et s qui représente un écart standard de l'orientation de gradient de luminosité dans la pluralité de pixels, et pour estimer l'angle de roulis sur base de l'inclinaison calculée;

le segment d'estimation (23) est configuré pour estimer que l'angle de roulis est de zéro degré si l'inclinaison se situe dans une plage prédéterminée par rapport à zéro, et pour sélectionner une crête qui représente une crête des bords dans la direction horizontale ou des bords dans la direction verticale dans un histogramme d'orientation de gradient de luminosité d'une image passée, qui a été estimée comme présentant l'angle de roulis de zéro degré, par rapport à l'histogramme d'orientation de gradient de luminosité de l'image cible et pour estimer un angle de roulis dans l'image cible sur base d'une orientation de gradient de luminosité de la crête sélectionnée si l'image cible ne présente pas l'inclinaison présentant une valeur dans la plage prédéterminée par rapport à zéro.

**2.** Système d'estimation d'angle de roulis de véhicule (10) selon la revendication 1, dans lequel le segment d'estimation (23) est configuré pour sélectionner une crête dont l'orientation de gradient de luminosité présente un angle par rapport à une orientation de gradient de luminosité d'une crête des bords dans la direction horizontale ou des bords dans la direction verticale dans une image précédant immédiatement l'image cible n'excédant pas d'une valeur de seuil la crête de l'histogramme d'orientation de gradient de luminosité de l'image cible et pour estimer un angle de roulis dans l'image cible sur base d'une orientation de gradient de luminosité de la crête sélectionnée si l'image cible ne présente pas l'inclinaison dans la plage prédéterminée par rapport à zéro.

3.  Système d'estimation d'angle de roulis de véhicule (10) selon la revendication 1 ou 2,
    dans lequel le segment d'estimation (23) est configuré pour effectuer une correspondance de forme entre un histogramme d'orientation de gradient de luminosité dans une image passée et un histogramme d'orientation de gradient de luminosité actuel dans l'image cible, calculant ainsi un déplacement d'angle de roulis de l'image passée à l'image cible, et pour estimer un angle de roulis dans l'image cible à partir du déplacement d'angle de roulis et d'un angle de roulis dans l'image passée si l'image cible ne présente pas l'inclinaison dans la plage prédéterminée par rapport à zéro.

4.  Système d'estimation d'angle de roulis de véhicule (10) selon l'une des revendications 1 à 3,
    dans lequel le générateur d'histogramme (22) est configuré pour égaler, pour tout angle $\theta$ non inférieur à 0 degrés et non supérieur à 180 degrés, l'angle $\theta$ à l'angle $\theta$ + 180 degrés, et génère ainsi un histogramme d'orientation de gradient de luminosité dans une plage de l'angle $\theta$.

5.  Système d'estimation d'angle de roulis de véhicule (10) selon l'une des revendications 1 à 4,
    dans lequel le générateur d'histogramme (22) est configuré pour pondérer une intensité de gradient de luminosité de chaque pixel, et pour ajouter ensuite l'orientation de gradient de luminosité de chaque pixel à l'histogramme.

6.  Système d'estimation d'angle de roulis de véhicule (10) selon l'une des revendications 1 à 5, comprenant par ailleurs:

    un capteur interne (60) configuré pour détecter un angle d'inclinaison du véhicule (1),
    dans lequel le système d'estimation d'angle de roulis de véhicule (10) est configuré pour compléter l'angle de roulis qui est estimé par le segment d'estimation (23) à l'aide de l'angle d'inclinaison du véhicule (1) qui est détecté par le capteur interne (60).

7.  Système d'estimation d'angle de roulis de véhicule (10) selon l'une des revendications 1 à 6, comprenant par ailleurs:

    un capteur interne (60) configuré pour détecter un angle d'inclinaison du véhicule (1),
    dans lequel le système d'estimation d'angle de roulis de véhicule (10) est configuré pour vérifier l'angle de roulis qui est estimé par le segment d'estimation (23) à l'aide de l'angle d'inclinaison du véhicule (1) qui est détecté par le capteur interne (60).

8.  Système d'estimation d'angle de roulis de véhicule (10) selon la revendication 6,
    dans lequel le système d'estimation d'angle de roulis de véhicule (10) est par ailleurs configuré pour vérifier l'angle de roulis qui est estimé par le segment d'estimation (23) à l'aide de l'angle d'inclinaison du véhicule (1) qui est détecté par le capteur interne (60).

9.  Véhicule (1) inclinable dans une direction gauche-droite par rapport à une direction de déplacement, comprenant un système d'estimation d'angle de roulis de véhicule selon l'une des revendications 1 à 8.

10. Procédé d'estimation d'angle de roulis de véhicule pour estimer, dans un véhicule (1) qui est inclinable dans une direction gauche-droite, un angle de roulis d'un dispositif d'imagerie (40) qui varie au fur et à mesure que varie l'inclinaison du véhicule (1), en analysant une image capturée par le dispositif d'imagerie (40) à même de capturer des images vers l'avant ou vers l'arrière du véhicule (1), le procédé comprenant:

    une étape d'obtention d'image (S1) consistant à obtenir une pluralité d'images comportant une image cible capturée en série par le dispositif d'imagerie (40),
    une étape de génération d'histogramme (S4) pour générer un histogramme d'orientation de gradient de luminosité qui montre une distribution de fréquence de l'orientation de gradient de luminosité d'une pluralité de pixels contenus dans l'image;
    une étape d'estimation (S5 à S10) dans laquelle un ordinateur calcule une inclinaison qui indique un état symétrique de l'histogramme d'orientation de gradient de luminosité à l'aide de $\theta i$ qui représente une valeur de l'orientation de gradient de luminosité dans une pluralité de pixels contenus dans une image, $\theta\mu$ qui représente

un valeur moyenne de l'orientation de gradient de luminosité dans la pluralité de pixels, n qui représente une quantité de pixels pour lesquels a été calculée l'orientation de gradient de luminosité, et s qui représente un écart standard de l'orientation de gradient de luminosité dans la pluralité de pixels, et estime que l'angle de roulis est de zéro degré si l'inclinaison se situe dans une plage prédéterminée par rapport à zéro, et sélectionne une crête qui représente une crête des bords dans la direction horizontale ou des bords dans la direction verticale dans un histogramme d'orientation de gradient de luminosité d'une image passée qui a été estimée comme présentant un angle de roulis de zéro degré, par rapport à l'histogramme d'orientation de gradient de luminosité de l'image cible et estime un angle de roulis dans l'image cible sur base d'une orientation de gradient de luminosité de la crête sélectionnée si l'image cible ne présente pas l'inclinaison présentant une valeur dans la plage prédéterminée par rapport à zéro.

FIG. 1

FIG. 2

10

40

20

Imaging
Device

Roll Angle Estimation Device

21

22

Memory

Histogram Generator

23

Estimation Section

50

Vehicle Controller

# FIG. 3

FIG. 4

# FIG. 5

```
                    ┌──────────┐
                    │  START   │
                    └──────────┘
                         │
                         ▼
        ┌───────────────────────────────┐ S1
        │       Obtain an image         │
        └───────────────────────────────┘
                         │
                         ▼
        ┌───────────────────────────────┐ S2
        │  Calculate brightness gradient │
        │     orientation of each pixel  │
        └───────────────────────────────┘
                         │
                         ▼
        ┌───────────────────────────────┐ S3
        │  Calculate brightness gradient │
        │     intensity of each pixel    │
        └───────────────────────────────┘
                         │
                         ▼
        ┌───────────────────────────────┐ S4
        │      Generate a histogram     │
        └───────────────────────────────┘
                         │
                         ▼
```

S5
|Skewness−0| <=Th1?      — YES →

NO

S6
Estimate that Roll Angle=0

S7
Is there a peak within a range of Threshold value Th2 from the previous vertical direction?   — YES →

NO

S8
Estimate a roll angle using a brightness gradient orientation of the peak found in range Th2

S9
Is matching with the previous histogram successful?   — YES →

NO

S10
Estimate a roll angle using a result of matching

```
                    ┌──────────┐
                    │   END    │
                    └──────────┘
```

FIG. 6

FIG. 7A

| -1 | 0 | 1 |
|----|---|---|
| -2 | 0 | 2 |
| -1 | 0 | 1 |

FIG. 7B

| -1 | -2 | -1 |
|----|----|----|
| 0  | 0  | 0  |
| 1  | 2  | 1  |

# FIG. 8

```
                    ┌──────────┐
                    │  START   │
                    └──────────┘
                         │
              ┌──────────────────────┐
              │    y = Y_start        │ S11
              └──────────────────────┘
                         │
              ┌──────────────────────┐
              │    x = X_start        │ S12
              └──────────────────────┘
                         │
              ┌──────────────────────┐
              │      a = 0            │ S13
              └──────────────────────┘
                         │
                    ┌─────────┐           YES   ┌────────────────────────┐
              S14   │ Θ(x,y) = a ? │─────────────│ h[a] = h[a] + m(x,y)  │ S15
                    └─────────┘                  └────────────────────────┘
                         │ NO
              ┌──────────────────────┐
              │    a = a +1           │ S16
              └──────────────────────┘
                         │
              S17   ┌─────────┐
              NO    │ a = 180 ? │
                    └─────────┘
                         │ YES
              ┌──────────────────────┐
              │     x = x +1          │ S18
              └──────────────────────┘
                         │
              S19   ┌─────────┐
              NO    │ x = X_end ? │
                    └─────────┘
                         │ YES
              ┌──────────────────────┐
              │     y = y +1          │ S20
              └──────────────────────┘
                         │
              S21   ┌─────────┐
              NO    │ y = Y_end ? │
                    └─────────┘
                         │ YES
                    ┌──────────┐
                    │   END    │
                    └──────────┘
```

FIG. 9

# FIG. 10A

# FIG. 10B

P2 (θ2=0°)  P2 (θ2=180°)

x

Th3  Th3

P1 (θ1=90°)

y

# FIG. 10C

0°  90°  180°

FIG. 10D

FIG. 11A

FIG. 11B

FIG. 12

FIG. 13

# FIG. 14

START

Obtain an image — S1

Calculate brightness gradient
orientation of each pixel — S2

Calculate brightness gradient
intensity of each pixel — S3

Generate a histogram — S4

S5

|Skewness−0|
<=Th1?

YES → Estimate that Roll Angle=0 — S6

NO

S7

Is there a peak within a
predetermined range Th2 from the
previous vertical direction?

YES → Estimate a roll angle using
a brightness gradient orientation
of the peak found in range Th2 — S8

NO

S9

Is matching with
the previous histogram
successful?

YES → Estimate a roll angle
using a result
of matching — S10

NO

Complement
by internal sensor — S100

END

# FIG. 15

FIG. 16

FIG. 17

# FIG. 18

# FIG. 19

**REFERENCES CITED IN THE DESCRIPTION**

**Patent documents cited in the description**

- JP 2015058915 A
- JP 4950290 B

- JP 4862080 B

**Non-patent literature cited in the description**

- Video-based roll angle estimation for two-wheeled vehicles. **MARC SCHLIPSING et al.** INTELLIGENT VEHICLES SYMPOSIUM (IV). IEEE, 05 June 2011, 876-881

- A fast coarse-to-fine vehicle logo detection and recognition method. **YUNQIONG WANG et al.** ROBOTICS AND BIOMIMETICS, 2007, ROBIO 2007, IEEE INTERNATIONAL CONFERENCE ON. IEEE, 15 December 2007, 696-696